# FASCICULE DE BREVET EUROPEEN

(11) **EP 3 423 318 B1**
(45) Date de publication et mention de la délivrance du brevet: **27.11.2019**
(21) Numéro de dépôt: 17711716.5
(22) Date de dépôt: 01.03.2017
(51) Int. Cl.: B60T 17/08, B60T 17/16, B61H 5/00, B60T 13/26, F16D 55/224

(54) **SYSTÈME DE FREINAGE FERROVIAIRE POUR VÉHICULE FERROVIAIRE ET PROCÉDÉ DE FREINAGE D'UN VÉHICULE FERROVIAIRE COMPORTANT UN TEL SYSTÈME**
EISENBAHNBREMSSYSTEM FÜR SCHIENENFAHRZEUG UND VERFAHREN ZUM BREMSEN EINES SCHIENENFAHRZEUGS MIT SOLCH EINEM SYSTEM
RAILWAY BRAKING SYSTEM FOR RAILWAY VEHICLE AND METHOD FOR BRAKING A RAILWAY VEHICLE COMPRISING SUCH A SYSTEM

(30) Priorité: 04.03.2016 FR 1651829
(43) Date de publication de la demande: 09.01.2019
(73) Titulaire: Faiveley Transport Amiens, 80000 Amiens (FR)
(72) Inventeur: CROCHU, Candice, 80000 AMIENS (FR); GONCALVES, Claudino, 80620 RIBEAUCOURT (FR); SALES, Jérémie, 80000 AMIENS (FR)
(74) Mandataire: Santarelli
(86) Numéro de dépôt international: PCT/FR2017/050461
(87) Numéro de publication internationale: WO 2017/149244

(56) Documents cités:
- EP-A1- 2 154 040
- EP-A1- 2 202 122
- WO-A1-2014/026936
- WO-A2-2012/038277

## Description

### DOMAINE DE L'INVENTION

L'invention concerne le domaine du freinage des véhicules ferroviaires.

Elle concerne plus particulièrement les systèmes de freinage ferroviaires pour véhicule ferroviaire pourvus d'un frein de service et d'un frein de parking configurés pour agir sur une timonerie de freinage.

Elle concerne également les procédés de freinage de véhicules ferroviaires comportant de tels systèmes de freinage.

### ARRIERE PLAN TECHNOLOGIQUE

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ressort se substituant à la force du fluide. Une fois ce frein de parking activé, le frein reste serré en permanence.

On connaît de la demande de brevet européen EP 2 154 040 un système de freinage ferroviaire pourvu d'un actionneur de frein de parking accouplé à un cylindre de frein de service ferroviaire. Ce cylindre de frein comporte un corps et un piston mobile par rapport au corps pour agir sur la timonerie de freinage par l'intermédiaire d'une tige de poussée.

Le cylindre de frein comporte également une chambre de pression délimitée par le piston et par le corps et qui est raccordée par un conduit à une source d'agent de pression pneumatique pour mettre le piston dans une position de freinage de service.

Le frein de parking comporte quant à lui un corps distinct du corps du cylindre de frein. Le corps du frein de parking présente une ouverture en vis-à-vis du piston du cylindre de frein de service, laquelle ouverture reçoit à coulissement un manchon de poussée s'ajustant dans cette ouverture de manière étanche.

Le frein de parking comporte également un piston monté mobile dans un cylindre solidaire du corps et délimitant avec le corps une chambre de pression de frein de parking. Cette chambre de pression de frein de parking est raccordée à une autre source d'agent de pression pneumatique via un conduit. Le piston comporte en son centre un orifice traversé par le manchon de poussée.

Le frein de parking comporte en outre des ressorts qui sollicitent en permanence le piston de ce frein de parking vers une position dite basse où le frein de parking est considéré comme étant dans une configuration de travail.

Pour actionner le frein de parking lorsque le piston du cylindre de frein de service est en position de freinage de service, la chambre de pression du frein de parking (préalablement remplie avec l'agent de pression pneumatique) est vidangée et les ressorts du frein de parking agissent alors sur le piston du frein de parking, lequel entraîne le manchon jusqu'à ce que ce dernier vienne en appui contre le piston du cylindre de frein de service.

La chambre de pression du cylindre de frein de service peut alors être vidangée puisque le frein de parking est actionné.

La force appliquée par le frein de parking sur le piston de frein de service est directement fonction de la force développée par les ressorts. Cette force est fonction bien entendu de la raideur et de l'allongement de ces ressorts.

Avec ce système de freinage, l'effort appliqué par le piston du cylindre de frein de service lorsque le frein de parking est actionné et le cylindre de frein de service est vidangé sur la timonerie de freinage est souvent inférieur à l'effort appliqué par ce même piston lorsqu'il est en position de freinage de service.

### OBJET DE L'INVENTION

L'invention concerne un système de freinage pour véhicule ferroviaire, présentant des performances améliorées par rapport aux systèmes de freinage de l'art antérieur susmentionnés, tout en étant simple, commode et économique.

L'invention a ainsi pour objet, sous un premier aspect, un système de freinage ferroviaire pour véhicule ferroviaire à freins à au moins une garniture ou à au moins une semelle, comportant un corps, une timonerie de freinage configurée pour agir sur au moins un dit frein, un frein de service comportant un piston de freinage mobile par rapport audit corps pour agir sur ladite timonerie de freinage et délimitant avec ledit corps une chambre de pression de frein de service configurée pour être alimentée par une première source d'agent de pression pneumatique pour mettre ledit piston de freinage dans une position de freinage de service, ainsi qu'un frein de parking configuré pour agir sur ledit piston de freinage dudit frein de service et admettant une configuration de travail et une configuration de repos ;
ledit frein de parking comportant un dispositif de blocage mobile par rapport audit corps pour agir sur ledit piston de freinage et admettant une première position et une seconde position dans laquelle ledit dispositif de blocage est configuré pour immobiliser ledit piston de freinage en position de freinage de service, ledit frein de parking étant alors en configuration de travail, et un dispositif de commande mobile par rapport audit corps, délimitant avec ledit corps une chambre de pression de frein de parking configurée pour être alimentée par une deuxième source d'agent de pression pneumatique, et admettant une position de verrouillage dans laquelle ledit dispositif de commande est configuré pour maintenir ledit dispositif de blocage dans sa seconde position ; et
ledit système de freinage ferroviaire comportant en outre un premier dispositif de distribution pneumatique dédié qui est formé par au moins un premier distributeur pourvu d'un tiroir mobile à deux positions, d'un unique orifice d'entrée connecté à une source d'alimentation en agents de pression pneumatique, d'un unique orifice de sortie connecté à ladite chambre de pression de frein de parking afin de l'alimenter avec ledit deuxième agent de pression pneumatique ou de la vidanger pour mettre ledit frein de parking respectivement dans ses configurations de repos et de travail, et d'un orifice débouchant à l'atmosphère ; ainsi qu'un second dispositif de distribution pneumatique dédié qui est formé par au moins un second distributeur pourvu d'un tiroir mobile à deux positions, d'un unique orifice d'entrée connecté à ladite source d'alimentation en agents de pression pneumatique, d'un unique orifice de sortie connecté à ladite chambre de pression de frein de service afin de l'alimenter avec un troisième agent de pression pneumatique dont la valeur de pression est déterminée, de sorte à appliquer un effort de freinage déterminé lorsque ledit frein de parking est en configuration de travail, et d'un orifice débouchant à l'atmosphère.

Dans le système de freinage selon l'invention, le piston de freinage est immobilisé en position de freinage de service par le frein de parking et en particulier par son dispositif de blocage. Cela signifie que le piston de freinage peut être immobilisé dans n'importe quelle position, laquelle position est liée à la course que ce piston a parcourue et cette course dépend de l'effort appliqué lors de la phase de freinage de service.

On entend par le terme immobiliser le fait que l'effort appliqué par le piston de freinage sur la timonerie de freinage dans la configuration de travail du frein de parking ne diminue pas, ou presque pas.

On admet tout de même une certaine perte liée au recul du piston de freinage, en particulier au léger déplacement du piston par rapport au dispositif de blocage, au moment où la chambre de pression de frein de service est vidangée. Cette perte est maîtrisée et se définit par une très légère diminution de l'effort appliqué qui est due notamment aux tolérances de fabrication à la fois du dispositif de blocage et du piston de freinage. Cette diminution de l'effort appliqué sur la timonerie de freinage est ici appelée pertes au recul. Une valeur acceptable de ces pertes au recul est au maximum de l'ordre de 10% à 15% de l'effort appliqué par le frein de service à l'instant où le frein de parking est actionné pour être en configuration de travail.

La configuration du piston de freinage et du frein de parking permet de s'affranchir notamment des ressorts des systèmes de freinage connus décrits ci-dessus qui permettent d'appliquer l'effort de frein de parking sur la timonerie de freinage par l'intermédiaire du piston du cylindre de frein de service. Ainsi, pour un même effort appliqué sur la timonerie de freinage lorsque le frein de parking est en configuration de travail, le système de freinage selon l'invention est plus compact que les systèmes de freinage de l'art antérieur susmentionnés, et également plus léger.

On notera que la timonerie de freinage présente avantageusement des bras déformables dont l'élasticité peut se substituer à celle des ressorts des systèmes de freinage connus décrits ci-dessus.

On notera que la configuration du frein de parking est choisie de telle sorte que la force appliquée directement par le dispositif de blocage pour immobiliser le piston de freinage n'est généralement pas supérieure à la force appliquée par les ressorts sur le piston des systèmes de freinage de l'art antérieur susmentionnés ; alors que l'effort appliqué sur la timonerie de freinage lorsque le frein de parking du système selon l'invention est en configuration de travail est de préférence au moins égal voire supérieur à celui procuré par les systèmes de freinage de l'art antérieur susmentionnés.

Le système de freinage selon l'invention peut en outre permettre d'alimenter momentanément la chambre de pression de frein de service avec le troisième agent de pression pneumatique afin d'augmenter l'effort de freinage appliqué sur la timonerie de freinage par le piston de frein de service. L'effort de freinage appliqué sur la timonerie de freinage lorsque le frein de parking est dans sa configuration de travail en est donc d'autant augmenté.

Le système selon l'invention peut ainsi permettre d'obtenir des efforts de freinage de frein de service et de frein de parking supérieurs à ceux obtenus avec les systèmes de freinage de l'art antérieur susmentionnés, de manière simple, commode et économique, tout en étant particulièrement sécuritaire.

L'application du frein de parking et en particulier l'alimentation de la chambre de frein de parking ainsi que l'alimentation de la chambre de frein de service, avec respectivement le deuxième agent de pression pneumatique et le troisième agent de pression qui est distinct du premier agent de pression, sont ici particulièrement simples et commodes à mettre en oeuvre grâce aux premier et second dispositifs de distribution dédiés à l'application du frein de parking.

Les distributeurs de ces premier et second dispositifs de distribution dédiés peuvent par exemple être formés par des électrovannes.

On notera par ailleurs que le premier agent de pression pneumatique permet généralement d'alimenter, lorsque le frein de parking n'est pas en configuration de travail, la chambre de pression de frein de service pour appliquer un effort de freinage de service, conformément à une consigne de frein de service. Ce même premier agent de pression pneumatique peut également permettre d'alimenter, lorsque le frein de parking n'est pas en configuration de travail, la chambre de pression de frein de service pour appliquer un effort de freinage d'urgence plutôt que de service, conformément à une consigne de frein d'urgence. Il peut être considéré ici que l'effort de frein d'urgence est un effort de frein de service modifié par un paramètre d'urgence.

Selon des caractéristiques préférées, simples, commodes et économiques du système selon l'invention :
- le premier distributeur présente une première position par défaut dite de sécurité dans laquelle son unique orifice de sortie connecté à ladite chambre de pression de frein de parking communique avec son orifice débouchant à l'atmosphère, et le second distributeur présente une première position par défaut dite de sécurité dans laquelle son unique orifice de sortie connecté à la chambre de pression de frein de service communique avec son unique orifice d'entrée connectée à la source d'alimentation en agents de pression pneumatique ;
- le premier distributeur présente une première position par défaut dite de disponibilité dans laquelle son unique orifice de sortie connecté à ladite chambre de pression de frein de parking communique avec son unique orifice d'entrée connecté à la source d'alimentation en agents de pression pneumatique, et le second distributeur présente une première position par défaut dite de disponibilité dans laquelle son unique orifice de sortie connecté à la chambre de pression de frein de service communique avec son orifice débouchant à l'atmosphère ;

- au moins un dudit premier distributeur et dudit second distributeur est monostable et pourvu d'un actionneur configuré pour déplacer le tiroir respectif de sa première position à sa deuxième position en fonction d'un signal de commande reçu par cet actionneur, et d'un organe de rappel configuré pour ramener le tiroir respectif de sa deuxième position vers sa première position sans sollicitation de l'actionneur ; et/ou au moins un dudit premier distributeur et dudit second distributeur est bistable et pourvu d'un premier actionneur configuré pour déplacer le tiroir respectif de sa première position à sa deuxième position en fonction d'un premier signal de commande reçu par ce premier actionneur, et d'un deuxième actionneur configuré pour déplacer le tiroir respectif de sa deuxième position vers sa première position en fonction d'un deuxième signal de commande reçu par ce deuxième actionneur ;
- ledit premier dispositif de distribution pneumatique dédié est formé par deux premiers distributeurs identiques et montés en série et ledit second dispositif de distribution pneumatique dédié est formé par deux seconds distributeurs identiques et montés en série ;
- ledit système comporte un dispositif de commande dédié configuré pour commander lesdits premier et second dispositifs de distribution pneumatique ;
- ledit dispositif de commande des premier et second dispositifs de distribution pneumatique comporte une ligne de commande reliée à chacun de ces premier et second dispositifs de distribution pneumatique et configurée pour faire circuler au moins une consigne d'application du frein de parking ;
- ladite ligne de commande est reliée directement à chacun des premier et second dispositifs de distribution pneumatique et configurée pour faire circuler au moins une consigne d'application du frein de parking ;
- ladite ligne de commande est reliée directement seulement audit second dispositif de distribution pneumatique et ledit dispositif de commande comporte en outre une ligne de transmission reliant l'unique orifice de sortie du second distributeur dudit second dispositif de distribution pneumatique au premier dispositif de distribution pneumatique et un manostat interposé sur ladite ligne de transmission ;
- ledit dispositif de commande des premier et second dispositifs de distribution pneumatique comporte en outre au moins un système de gestion conditionnelle disposé sur ladite ligne de commande en amont desdits premier et second dispositifs de distribution pneumatique et admettant un premier état dans lequel il autorise la circulation de la consigne d'application du frein de parking par la ligne de commande jusqu'aux premier et second dispositifs de distribution pneumatique, et un second état dans lequel il interdit la circulation de la consigne d'application du frein de parking par la ligne de commande jusqu'aux premier et second dispositifs de distribution pneumatique ;
- ledit système de gestion conditionnelle est pourvu d'un distributeur ayant un orifice d'entrée connecté à ladite source d'alimentation en agents de pression pneumatique, un orifice de sortie connecté à la ligne de commande et un actionneur commandé par au moins un signal de commande représentatif au moins d'une valeur de pression dans une conduite pneumatique principale ou générale dudit système de freinage ferroviaire et/ou d'une valeur de pression dans la chambre de pression de frein de service ;
- ledit système de gestion conditionnelle est pourvu d'un manostat interposé sur ladite ligne de commande ;
- ledit système comporte en outre un dispositif de détection dédié configuré pour détecter l'application du frein de parking ;
- ledit dispositif de détection d'application du frein de parking est configuré pour recevoir une information représentative de l'alimentation de la chambre de pression de frein de service par le troisième agent de pression pneumatique via ledit second dispositif de distribution pneumatique, et recevoir une information représentative de la vidange de la chambre de pression de frein de parking via ledit premier dispositif de distribution pneumatique ;
- ledit dispositif de détection d'application du frein de parking est formé par un premier manostat disposé en sortie dudit second dispositif de distribution pneumatique et par un second manostat disposé en sortie dudit premier dispositif de distribution pneumatique et connecté audit premier manostat ;
- ledit dispositif de détection d'application du frein de parking est configuré pour traiter ladite information représentative de l'alimentation de la chambre de pression de frein de service par le troisième agent de pression pneumatique via ledit second dispositif de distribution pneumatique, et pour commander ledit premier dispositif de distribution pneumatique ;
- ledit dispositif de détection d'application du frein de parking est formé par un premier manostat disposé en sortie dudit second dispositif de distribution pneumatique et connecté audit premier dispositif de distribution pneumatique, et par un organe de détection disposé en sortie dudit premier dispositif de distribution pneumatique ;
- ledit dispositif de détection d'application du frein de parking est configuré pour traiter ladite information représentative de l'alimentation de la chambre de pression de frein de service par le troisième agent de pression pneumatique via ledit second dispositif de distribution pneumatique et ladite information représentative de la vidange de la chambre de pression de frein de parking via ledit premier dispositif de distribution pneumatique, et pour déclencher un indicateur représentatif de l'application du frein de parking ; et/ou
- ledit système comporte en outre un dispositif de test dédié configuré pour tester le fonctionnement du frein de parking, lequel dispositif de test est pourvu d'au moins deux lignes de test connectées audits premier et second dispositifs de distribution pneumatique, lesquelles lignes de test sont indépendantes ou interconnectées.

L'invention a aussi pour objet, sous un deuxième aspect, un procédé de freinage d'un véhicule ferroviaire, comportant un système de freinage ferroviaire tel que décrit ci-dessus, comportant :
- l'étape de commander le premier dispositif de distribution pneumatique dédié pour alimenter la chambre de pression de frein de parking avec le deuxième agent de pression pneumatique de sorte à mettre le frein de parking dans sa configuration de repos puis optionnellement, l'étape d'alimenter la chambre de pression de frein de service avec le premier agent de pression pneumatique de sorte à mettre le piston de freinage dans sa position de freinage de service ; puis
- simultanément ou successivement quel que soit l'ordre, les étapes de commander le second dispositif de distribution pneumatique dédié pour alimenter la chambre de pression de frein de service avec le troisième agent de pression pneumatique de sorte à appliquer un effort de freinage déterminé et de commander le premier dispositif de distribution pneumatique dédié pour vidanger la chambre de pression de frein de parking de sorte à mettre le frein de parking dans sa configuration de travail.

Le procédé selon l'invention est particulièrement simple et commode à mettre en oeuvre, tout en étant également particulièrement sûr.

Selon des caractéristiques préférées, simples, commodes et économiques du procédé selon l'invention, il comporte au surplus les étapes de détecter au moins une information représentative de l'alimentation de la chambre de pression de frein de service avec le troisième agent de pression pneumatique et de la vidange de la chambre de pression de frein de parking, et d'en déduire une information représentative de l'application du frein de parking.

### BREVE DESCRIPTION DES DESSINS

On va maintenant poursuivre l'exposé de l'invention par la description d'exemples de réalisation, donnée ci-après à titre illustratif et non limitatif, en référence aux dessins annexés sur lesquels :
- la figure 1 illustre schématiquement et partiellement un système de freinage ferroviaire conforme à un premier mode de réalisation de l'invention, lequel système est pourvu notamment d'un frein de service, d'un frein de parking et d'une unité de contrôle et de commande ;
- la figure 2 représente schématiquement de manière plus détaillée l'unité de contrôle et de commande illustrée sur la figure 1 et un réseau de cheminement de conduites du système qui est connecté à cette unité, laquelle unité est pourvue notamment de premier et second dispositifs de distribution pneumatique connectés au frein de parking, d'un dispositif de commande de ces premier et second dispositifs de distribution pneumatique et d'un dispositif de détection de l'application du frein de parking ;

- les figures 3 à 6 représentent des variantes de réalisation des premier et second dispositifs de distributeurs illustrés sur la figure 2 ;
- les figures 7 à 10 représentent des variantes de réalisation du dispositif de commande des premier et second dispositifs de distribution pneumatique, illustré sur la figure 2 ;
- les figures 11 à 14 représentent des variantes de réalisation du dispositif de détection de l'application du frein de parking, illustré sur la figure 2 ; et
- les figures 15 et 16 représentent différents dispositifs de test du frein de parking que peut comporter l'unité de contrôle et de commande illustrée sur la figure 2.

### DESCRIPTION DETAILLEE D'UN EXEMPLE DE REALISATION

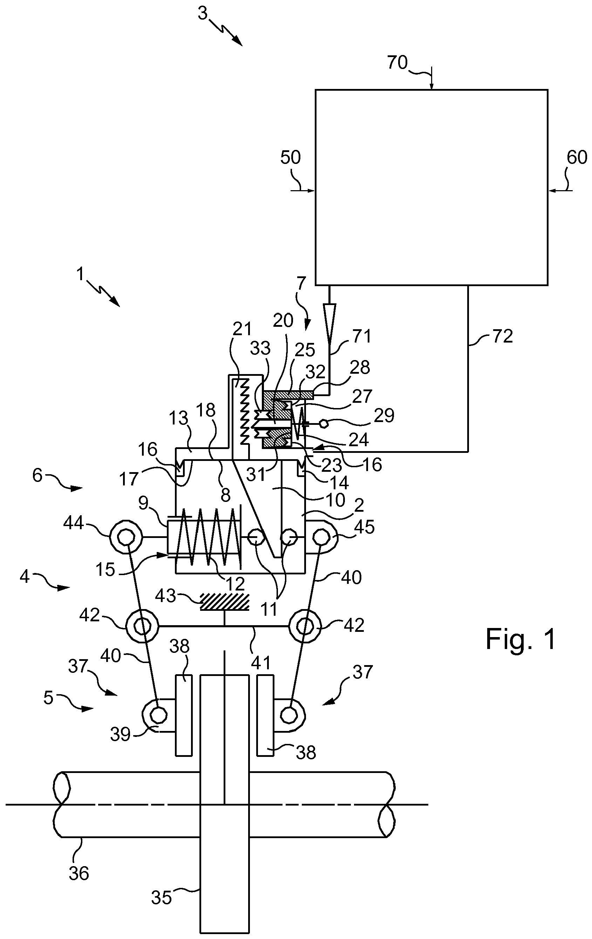

La figure 1 représente schématiquement un système de freinage ferroviaire 1 pour un véhicule ferroviaire à frein à garnitures ou à semelles.

Le système de freinage ferroviaire 1 comporte un corps 2 formant ici un cylindre à la fois de frein de service 6 et de frein de parking 7, une unité de contrôle et de commande 3 configurée pour gérer le fonctionnement du frein de service 6 et du frein de parking 7, un réseau de cheminement de conduites pneumatiques connecté au corps 2 et à l'unité de contrôle et de commande 3, une timonerie de freinage 4 reliée mécaniquement au corps 2 ainsi qu'un frein 5 à garnitures sur lequel la timonerie de freinage 4 est configurée pour agir.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés respectivement un premier côté 17 configuré pour agir sur la timonerie de freinage 4 par l'intermédiaire de la tige de poussée 9 et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14, par exemple formée par un joint à lèvre, et disposée entre ce piston de freinage 8 et des bords intérieurs du corps 2.

Le frein de service 6 comporte en outre une pièce de coin 10 fixée sur le premier côté 17 du piston de freinage 8.

Cette pièce de coin 10 présente une section triangulaire et est configurée pour coopérer avec un jeu de butées à roulements 11, dont l'une des butées à roulements est reliée au corps 2 tandis que l'autre des butées à roulements est reliée à la tige de poussée 9.

Cette tige de poussée 9 est pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 comporte en outre un ressort 12 ici disposé autour de la tige de poussée 9, entre la butée à roulements qui est reliée à cette dernière et le bord intérieur du corps 2. Ce ressort 12 est configuré pour rappeler la butée qui est reliée à la tige de poussée 9 contre la pièce de coin 10.

Le frein de service 6 comporte en outre un premier orifice 15 ménagé dans le corps 2 et configuré pour autoriser le déplacement de la tige de poussée 9 au travers de ce premier orifice 15.

Le frein de service 6 comporte en outre un deuxième orifice 16 ménagé dans le corps 2 et débouchant dans la chambre de pression de frein de service 13.

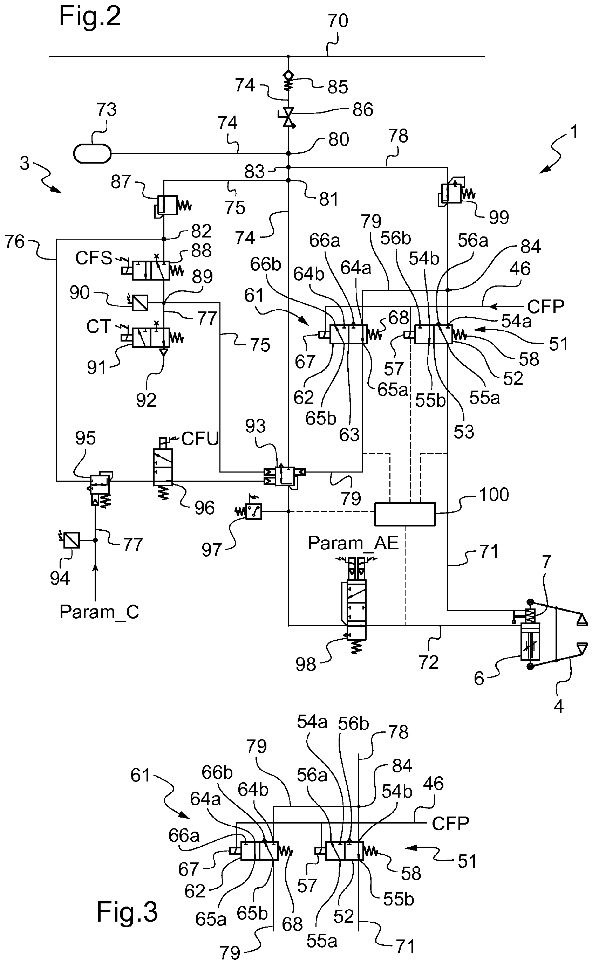

La chambre de pression de frein de service 13 est ici raccordée par une première conduite d'alimentation 72 du réseau de cheminement de conduites pneumatiques, appelée plus généralement conduite de frein, connectée au niveau de ce deuxième orifice 16, à une source d'alimentation en agents de pression pneumatiques 73 (visible figure 2).

Le corps 2 comporte une cavité 27 accolée à la chambre de pression de frein de service 13 et dans laquelle est disposé le frein de parking 7.

Le frein de parking 7 comporte un dispositif de blocage formé ici par un doigt de blocage 20 mobile par rapport au corps 2 et s'étendant suivant la deuxième direction axiale.

Le frein de parking 7 comporte en outre ici un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et qui est tourné vers la chambre de pression de frein de parking 25, ainsi qu'un second côté 32 opposé au premier côté 31.

Le frein de parking 7 comporte en outre ici un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

On notera que le piston de maintien 23 et que l'élément ressort 24 forment ici un dispositif de commande mobile du frein de parking 7.

Le piston de maintien 23 est configuré pour se déplacer dans le corps 2 tout en maintenant la chambre de pression de frein de parking 25 relativement étanche grâce à une membrane (non référencée) disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

On notera que l'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte en outre un quatrième orifice 28 ménagé dans le corps 2 et débouchant dans la chambre de pression de frein de parking 25.

Cette chambre de pression de frein de parking 25 est ici raccordée par une deuxième conduite d'alimentation 71 du réseau de cheminement de conduites pneumatiques, appelée aussi conduite de frein de parking, connectée au niveau de ce quatrième orifice 28, à la source d'alimentation en agents de pression pneumatiques 73 (visible figure 2).

Le frein de parking 7 comporte en outre une pièce de déverrouillage 29 rattachée sur le deuxième côté 32 du piston de maintien 23 et débouchant à l'extérieur du corps 2 au travers d'un cinquième orifice (non représenté) ménagé dans ce corps 2 et débouchant dans la cavité 27 ; de sorte que cette pièce de déverrouillage 29 est accessible pour être manipulée depuis l'extérieur du corps 2 le cas échéant.

On notera que cette pièce de déverrouillage 29 peut comporter un indicateur visuel, par exemple un soufflet de couleur, de sorte à indiquer visuellement l'état de cette pièce 29.

Dans une variante non illustrée, la pièce de déverrouillage 29 peut être couplée à système d'indication visuel pourvu d'un commutateur assujetti mécaniquement à cette pièce 29 et présentant une première position et une deuxième position. Ce système d'indication visuel est en outre pourvu d'une ligne d'alimentation électrique connectée au commutateur, d'un organe de rappel élastique sollicitant le commutateur dans sa première position, et d'une ligne de transfert connectée au commutateur et se prolongeant jusqu'à un indicateur visuel tel qu'un voyant lumineux. Par exemple, lorsque la tige de déverrouillage 29 n'est pas sollicitée, le commutateur est sollicité par l'organe de rappel dans sa première position où aucun chemin électrique n'est établi entre la ligne d'alimentation électrique et la ligne de transfert, de sorte que le voyant lumineux n'est pas alimenté et est donc éteint ; tandis que lorsque la tige de déverrouillage 29 est sollicitée, le commutateur est déplacé à l'encontre de l'organe de rappel de sa première position vers sa deuxième position, où un chemin électrique est établi entre la ligne d'alimentation électrique et la ligne de transfert, de sorte que le voyant lumineux est alimenté et est donc allumé pour indiquer que piston de freinage n'est pas bloqué en position. Bien entendu, le fonctionnement inverse est possible (le voyant serait allumé lorsque le piston de freinage serait bloqué).

Le frein de service 6 est disposé dans le corps 2 et est configuré pour agir sur le frein 5 par l'intermédiaire de la timonerie de freinage 4.

Ce frein 5 comporte un disque de frein 35 (ici vu de dessus) monté par exemple sur un essieu 36 de véhicule ferroviaire, ou directement sur la roue à freiner.

Ce frein 5 comporte en outre deux patins 37 pourvus chacun d'une garniture 38 configurée pour être appliquée au contact du disque 35 pour réduire sa vitesse de rotation et par conséquent celle de la roue à freiner, ainsi que d'un œillet de fixation 39 ménagé à l'opposé de la surface de la garniture 38 configurée pour venir s'appliquer sur le disque de frein 35.

La timonerie de freinage 4 comporte deux ou quatre leviers déformables 40 pourvus chacun d'une portion supérieure et d'une portion inférieure qui sont solidaires. Seulement deux leviers sont ici illustrés et, dans le cas où la timonerie présente quatre leviers, ils peuvent être solidaires deux à deux ou en variante indépendants les uns des autres.

Chaque portion des leviers 40 est articulée sur un connecteur central 41 par l'intermédiaire de deux pivots 42.

La portion inférieure de chaque levier déformable 40 est reliée à l'un des patins 37 par l'intermédiaire de son œillet de fixation 39.

La portion supérieure de chaque levier déformable 40 est quant à elle reliée à une articulation respective 44, 45.

La timonerie de freinage 4 reçoit le corps 2 entre les portions supérieures des leviers déformables 40, au niveau des articulations 44 et 45.

Le corps 2 est monté à rotation sur l'articulation 44 qui est solidaire d'une extrémité de la tige de poussée 9 tandis qu'il est monté fixe sur l'articulation 45, laquelle est directement solidaire de ce corps 2.

La timonerie de freinage 4 comporte également une patte de fixation 43 solidaire du connecteur central 41 pour le montage de cette timonerie de freinage 4 sur le véhicule ferroviaire ; afin que les patins de freinage 37 soient situés de part et d'autre du disque de frein 35 (ou de la roue du véhicule ferroviaire).

On notera que le rapprochement des articulations 44 et 45 permet d'écarter les patins 37 l'un de l'autre et qu'à l'inverse, l'éloignement de ces articulations 44 et 45 permet de serrer les patins 37 sur le disque de frein 35 (ou sur la roue du véhicule ferroviaire).

L'unité de contrôle et de commande 3 est connectée à la chambre de pression de frein de service 13 par l'intermédiaire de la première conduite d'alimentation 72 à laquelle elle est raccordée ; tandis que cette unité 3 est ici également connectée à la chambre de pression de frein de parking 25 par l'intermédiaire de la seconde conduite d'alimentation 71 à laquelle elle est raccordée. Au surplus, cette unité 3 est alimentée en agents pneumatiques par une conduite principale 70 qui chemine généralement le long du véhicule ferroviaire.

L'unité de contrôle et de commande 3 comporte des éléments systémiques (non représentés sur la figure 1) qui sont configurés pour recevoir et traiter des informations représentatives relatives à des consignes de fonctionnement du véhicule ferroviaire, par un premier canal du type électrique et/ou pneumatique et/ou encore manuel, noté 50 sur la figure 1.

Ces éléments systémiques sont en outre configurés pour recevoir et traiter des informations représentatives relatives à des paramètres d'utilisation du véhicule ferroviaire, par un second canal du type électrique et/ou pneumatique et/ou encore manuel, noté 60 sur la figure 1.

Ces éléments systémiques peuvent par exemple être formés par des relais pneumatiques et/ou des électrovannes et/ou des manostats et/ou des capteurs et/ou des détendeurs et/ou des relais électriques et/ou des cartes électroniques et/ou des unités centrales de traitement ou microprocesseurs, et/ou des composants de mémoire vive comportant des registres adaptés à enregistrer des variables des paramètres créés et modifiés au cours de l'exécution de programmes, et/ou des interfaces de communication configurées pour transmettre et recevoir des données, et/ou des éléments de stockage interne, tels que des disques durs, pouvant notamment comporter le code exécutable de programmes permettant la gestion des freins de service et parking 6 et 7.

On notera que sur la figure 1, l'unité de contrôle et de commande 3 est associée à une timonerie de freinage 4 et à un seul frein 5 du véhicule ferroviaire. En variante, une telle unité de contrôle et de commande peut être associée à un essieu (non illustré) du véhicule ferroviaire, pourvu d'une pluralité de freins 5, ou à un bogie (non illustré) du véhicule ferroviaire, pourvu de deux essieux ou plus, ou encore à une voiture (non illustrée) du véhicule ferroviaire, pourvue de deux bogies, ou le véhicule ferroviaire peut ne comporter qu'une telle unité de contrôle et de commande.

La figure 2 représente schématiquement de manière plus détaillée le réseau de cheminement de conduites pneumatiques et l'unité de contrôle et de commande 3.

La conduite principale 70 forme le canal d'acheminement d'un agent pneumatique distribué dans le réseau de cheminement de conduites pneumatiques. L'agent dans cette conduite principale 70 est par exemple à une valeur de pression d'environ 9 bars.

Le réseau peut comporter une conduite dite générale (non représentée), distincte de la conduite principale 70, et s'étendant généralement en parallèle à cette dernière. La conduite générale permet également d'assurer la continuité pneumatique le long du véhicule ferroviaire et peut autoriser le freinage de service du véhicule, en utilisant directement le fluide cheminant dans la conduite générale. La conduite principale 70, voire la conduite générale permettent d'alimenter des équipements notamment du système de freinage ferroviaire, et en particulier la source d'alimentation en agents de pression pneumatiques 73 ici formée par un réservoir dit auxiliaire.

Ce réseau comporte en outre, comme décrit plus en détails ci-après, une conduite de remplissage et de distribution 74 piquée (c'est-à-dire directement raccordée) sur la conduite principale 70, une conduite de frein de service 75 raccordée par un piquage 81 sur la conduite de remplissage et de distribution 74, une conduite de frein d'urgence 76 piquée sur la conduite de frein de service 75 par un piquage 82, ainsi qu'une conduite de commande 78 raccordée par un piquage 83 également sur la conduite de remplissage et de distribution 74.

La conduite de commande 78 se subdivise en deux conduites au niveau d'un piquage de dérivation 84, respectivement en la conduite de frein de parking 71 communiquant directement avec la chambre de pression de frein de parking 25 et en une conduite de suralimentation, dite ci-après conduite preset 79.

Chacune des conduites de frein de service 75, de frein d'urgence 76 et preset 79, rejoignent la conduite de frein 72 qui communique directement avec la chambre de pression de frein de service 13.

La conduite de remplissage et de distribution 74 présente un premier tronçon de remplissage s'étendant entre le piquage (non représenté) sur la conduite principale 70 et le réservoir auxiliaire 73, ainsi qu'un second tronçon de distribution s'étendant depuis un piquage 80 sur le premier tronçon.

L'unité de contrôle et de commande 3 comporte ici une valve anti-retour 85 disposée sur le premier tronçon de la conduite de remplissage et de distribution 74 à proximité du piquage de cette dernière sur la conduite principale 70, ainsi qu'un robinet d'isolement 86 disposé également sur ce premier tronçon.

La valve anti-retour 85 permet le remplissage du réservoir auxiliaire 73 par l'agent de pression pneumatique issu de la conduite principale 70 et interdit la vidange du réservoir 73 dans la conduite principale 70 si la pression dans cette dernière devient inférieure à celle dans le réservoir auxiliaire 73.

L'unité de contrôle et de commande 3 comporte en outre ici un dispositif de relayage 93, ou relais pneumatique, alimenté par le second tronçon de distribution de la conduite de remplissage et de distribution 74 et raccordé à la conduite de frein 72.

Ce dispositif de relayage 93 est configuré pour générer, à partir de ce second tronçon de distribution et de valeurs pilotes de pression, une pression d'utilisation à un débit déterminé pour le remplissage de la chambre de pression de frein de service 13.

Ces valeurs pilotes de pression correspondent ici à des consignes de pression de frein de service, de frein d'urgence et preset, venant respectivement de la conduite de frein de service 75, de la conduite de frein d'urgence 76 et de la conduite preset 79.

L'unité de contrôle et de commande 3 comporte en outre ici, sur la conduite de frein de service 75 un détendeur 87 configuré pour limiter la valeur de pression par exemple ici à environ 4 bars ainsi qu'un dispositif de distribution 88 formé ici par une électrovanne monostable et configuré pour recevoir un signal de commande correspondant à une consigne de frein de service CFS.

Lorsque la valeur de consigne CFS est nulle, le dispositif de distribution 88 est configuré pour interrompre la conduite de frein de service 75 ; et lorsque la valeur de consigne CFS est non nulle, ce dispositif 88 est configuré pour autoriser le passage d'un agent de pression pneumatique, appelé premier agent de pression, jusqu'au dispositif de relayage 93 qui reçoit une valeur pilote de pression de frein de service et qui génère une pression de frein de service pour alimenter la chambre de pression de frein de service 13 pour le freinage du véhicule.

L'unité de contrôle et de commande 3 comporte en outre un capteur de pression 90 raccordé par un piquage 89 sur la conduite de frein de service 75 et qui permet de contrôler la valeur pilote de pression de frein de service.

L'unité de contrôle et de commande 3 comporte en outre une électrovanne de vidange 91 raccordée par le piquage 89 sur la conduite de frein de service 75 et qui permet de vidanger cette conduite via un orifice de vidange 92 sur cette électrovanne 91.

L'électrovanne 91 est monostable et configurée pour recevoir un signal de commande correspondant à une consigne de travail CT et pour fonctionner en inverse.

Lorsque la valeur de consigne CT est non nulle, l'électrovanne 91 est configurée pour interrompre la communication de la conduite de frein de service 75 avec l'orifice de vidange 92 ; et lorsque la valeur de consigne CT est nulle, cette électrovanne 91 est configurée pour autoriser la communication de cette conduite 75 avec cet orifice de vidange 92.

L'unité de contrôle et de commande 3 comporte en outre ici, sur la conduite de frein d'urgence 76, un dispositif de distribution 96 formé ici par une électrovanne monostable fonctionnant en inverse et configurée pour recevoir un signal de commande correspondant à une consigne de frein d'urgence CFU.

Lorsque la valeur de consigne CFU est non nulle, le dispositif de distribution 96 est configuré pour interrompre la conduite de frein d'urgence 76 ; et lorsque la valeur de consigne CFU est nulle, ce dispositif 96 est configuré pour autoriser le passage d'un agent de pression pneumatique jusqu'au dispositif de relayage 93 qui reçoit une valeur pilote de pression de frein d'urgence et qui génère une pression de frein d'urgence pour alimenter la chambre de pression de frein de service 13 pour le freinage d'urgence du véhicule.

L'unité de contrôle et de commande 3 comporte en outre un limiteur de pression 95 (ou détendeur) sur la conduite de frein d'urgence 76 en amont du dispositif de distribution 96, lequel limiteur 95 est contrôlé en fonction d'un paramètre de charge param_C du véhicule reçu via une conduite de charge 77 connectée au limiteur 95 ; et un capteur de pression 94 piqué sur la conduite de charge 77.

Le paramètre de charge param_C est une information représentative de la charge du véhicule et peut concerner par exemple un wagon seulement, ou bien plusieurs wagons successifs ou l'intégralité du véhicule ferroviaire. Cela dépend du nombre de systèmes de freinage conformes à l'invention et de la stratégie de commande de freinage.

On notera d'ailleurs que certains paramètres de fonctionnement de certains véhicules ferroviaires peuvent naturellement (ou initialement) être asservis à la charge du véhicule par exemple pour gérer le frein de service tandis que d'autres ne sont pas asservis à la charge du véhicule.

L'unité de contrôle et de commande 3 comporte sur la conduite de frein 72, un manostat 97 en aval du dispositif de relayage 93 et configuré pour vérifier s'il y a ou non un agent de pression pneumatique, à une valeur de pression au moins supérieure à une valeur seuil prédéterminée, dans la conduite de frein 72 et donc s'il y a une pression dans la chambre de pression de frein de service 13.

L'unité de contrôle et de commande 3 comporte en outre sur la conduite de frein 72 un dispositif anti-enrayage 98 formé ici par une électrovanne monostable et configuré pour recevoir des signaux de commande correspondants à des paramètres d'anti-enrayage Param_AE du véhicule ; de sorte à assurer l'efficacité du freinage du véhicule ferroviaire.

Ces paramètres d'anti-enrayage Param_AE sont des informations représentatives de l'anti-enrayage ou de l'enrayage du véhicule et peuvent par exemple correspondre à la charge du véhicule, à sa vitesse de roulage ainsi qu'aux valeurs pilotes de frein de service et/ou d'urgence.

L'unité de contrôle et de commande 3 comporte sur sa conduite de commande 78 un détendeur 99 configuré pour limiter la valeur de pression par exemple ici à environ 6 bars.

L'unité de contrôle et de commande 3 comporte un premier dispositif de distribution pneumatique 51 dédié sur sa conduite de frein de parking 71 et un second dispositif de distribution pneumatique 61 dédié sur sa conduite preset 79.

Le premier dispositif de distribution pneumatique 51 est formé par un premier distributeur 52 ici monostable, aussi appelé électrovanne, pourvu d'un tiroir mobile 53 à deux positions, d'un unique orifice d'entrée 54 (noté 54a ou 54b sur les figures) connecté à la conduite de commande 78, d'un unique orifice de sortie 55 (noté 55a ou 55b sur les figures) connecté à la conduite de frein de parking 71, et d'un orifice 56 (noté 56a ou 56b sur les figures) débouchant à l'atmosphère.

Le premier distributeur 52 est pourvu en outre d'un actionneur 57 configuré pour déplacer le tiroir 53 de sa première position à sa deuxième position en fonction d'un signal de commande reçu par cet actionneur 57, et d'un organe de rappel 58 configuré pour ramener le tiroir 53 respectif de sa deuxième position vers sa première position sans sollicitation de l'actionneur 57.

Le second dispositif de distribution pneumatique 61 est formé par un second distributeur 62 ici monostable, ou électrovanne, pourvu d'un tiroir mobile 63 à deux positions, d'un unique orifice d'entrée 64 (noté 64a ou 64b sur les figures) connecté à la conduite de commande 78, d'un unique orifice de sortie 65 (noté 65a ou 65b sur les figures) connecté à la conduite de frein 72 via la conduite preset 79 et le dispositif de relayage 93, et d'un orifice 66 (noté 66a ou 66b sur les figures) débouchant à l'atmosphère.

Le second distributeur 62 est pourvu en outre d'un actionneur 67 configuré pour déplacer le tiroir 63 de sa première position à sa deuxième position en fonction d'un signal de commande reçu par cet actionneur 67, et d'un organe de rappel 68 configuré pour ramener le tiroir 63 respectif de sa deuxième position vers sa première position sans sollicitation de l'actionneur 67.

L'unité de contrôle et de commande 3 comporte en outre un dispositif de commande dédié configuré pour commander les premier et second dispositifs de distribution pneumatique 51 et 61.

Ce dispositif de commande des premier et second dispositifs de distribution pneumatique comporte ici une ligne de commande 46 reliée directement aux actionneurs 57 et 67 des premier et second dispositifs de distribution pneumatique 51 et 61 et configurée pour faire circuler une consigne d'application du frein de parking CFP.

Lorsque la consigne d'application du frein de parking CFP est nulle, cela signifie que le frein de parking 7 doit ici être appliqué. Il s'agit d'une application dite sécuritaire.

Le cas échéant, le premier distributeur 52 présente une première position par défaut dite de sécurité dans laquelle son unique orifice de sortie 55a connecté à la chambre de pression de frein de parking 25 via la conduite de frein de parking 71 communique avec son orifice débouchant à l'atmosphère 56a, tandis que son unique orifice d'entrée 54a connectée au réservoir auxiliaire 73 via la conduite de commande 78 et la conduite d'alimentation et de distribution 74 est bouché.

La chambre de pression de frein de parking 25 est alors vidangée et le doigt de blocage 20 vient immobiliser la tige 21 du piston 8. Le frein de parking est appliqué.

Le second distributeur 62 présente quant à lui une première position par défaut dite aussi de sécurité dans laquelle son unique orifice de sortie 65a connecté à la chambre de pression de frein de service 13 via la conduite de frein 72 communique avec son unique orifice d'entrée 64a connectée au réservoir auxiliaire 73 via la conduite de commande 78 et via la conduite d'alimentation et de distribution 74, tandis que son orifice 66a à l'atmosphère est bouché.

Le second distributeur 62 autorise donc le passage d'un agent de pression pneumatique, dit troisième agent de pression, jusqu'au dispositif de relayage 93 qui reçoit une valeur pilote de pression preset et qui génère une pression preset pour alimenter la chambre de pression de frein de service 13 via la conduite de frein 72.

Pour enlever l'application du frein de parking 7, une consigne non nulle d'application du frein de parking CFP chemine sur la ligne de commande 46 jusqu'aux actionneurs 57 et 67 qui déplacent les tiroirs 53 et 63 des premier et second distributeurs 52 et 62 à l'encontre des organes de rappel 58 et 68.

Le cas échéant, le premier distributeur 52 présente une seconde position dans laquelle son unique orifice de sortie 55b connecté à la chambre de pression de frein de parking 25 via la conduite de frein de parking 71 communique avec son unique orifice d'entrée 54b connectée au réservoir auxiliaire 73 via la conduite de commande 78 et la conduite d'alimentation et de distribution 74, tandis que son orifice débouchant à l'atmosphère 56b est bouché.

Le premier distributeur 52 autorise donc le passage d'un agent de pression pneumatique, dit deuxième agent de pression, directement jusqu'à la chambre de pression de frein de parking 25 via la conduite de frein de parking 71. Le doigt de blocage 20 est alors reculé dans cette chambre et libère la tige 21 du piston 8.

Le second distributeur 62 présente quant à lui une seconde position dans laquelle son unique orifice de sortie 65b est connecté à son orifice 66b à l'atmosphère, tandis que son unique orifice d'entrée 64b connectée au réservoir auxiliaire 73 via la conduite de commande 78 et la conduite d'alimentation et de distribution 74 est bouché.

Le second distributeur 62 interdit donc le passage du troisième agent de pression pneumatique jusqu'au dispositif de relayage 93 qui ne reçoit donc pas de valeur pilote de pression preset et qui vidange la pression preset le cas échéant.

L'unité de contrôle et de commande 3 comporte en outre un dispositif de détection 100 dédié configuré pour détecter l'application du frein de parking 7.

Ce dispositif de détection 100 d'application du frein de parking 7 est configuré pour recevoir une information représentative de l'alimentation de la chambre de pression de frein de service 13 par le troisième agent de pression pneumatique via le second distributeur 62, et recevoir une information représentative de la vidange de la chambre de pression de frein de parking 25 via le premier distributeur 52.

Pour ce faire, le dispositif de détection 100 peut comporter un premier capteur de pression (non illustré) piqué sur la conduite de frein de parking 71, entre le premier distributeur 52 et la chambre de pression de frein de parking 25 (trait en pointillés sur la figure 2) ; ainsi qu'un second capteur de pression (non illustré) piqué soit sur la conduite preset 79 entre le second distributeur 62 et le dispositif de relayage 93, soit sur la conduite de frein 72 entre la chambre de pression de frein de service 13 et le dispositif anti-enrayage 98 (traits en pointillés sur la figure 2) ou entre ce dernier et le dispositif de relayage 93.

En variante, le second capteur pourrait être piqué sur la conduite de frein 72 entre la chambre de pression de frein de service 13 et le dispositif de relayage 93.

En variante encore, au moins un des premier et second capteurs pourraient être remplacés par un ou plusieurs manostats, connectés sur la conduite de frein de parking 71 et/ou sur la conduite preset 79 et/ou sur la conduite de frein 72.

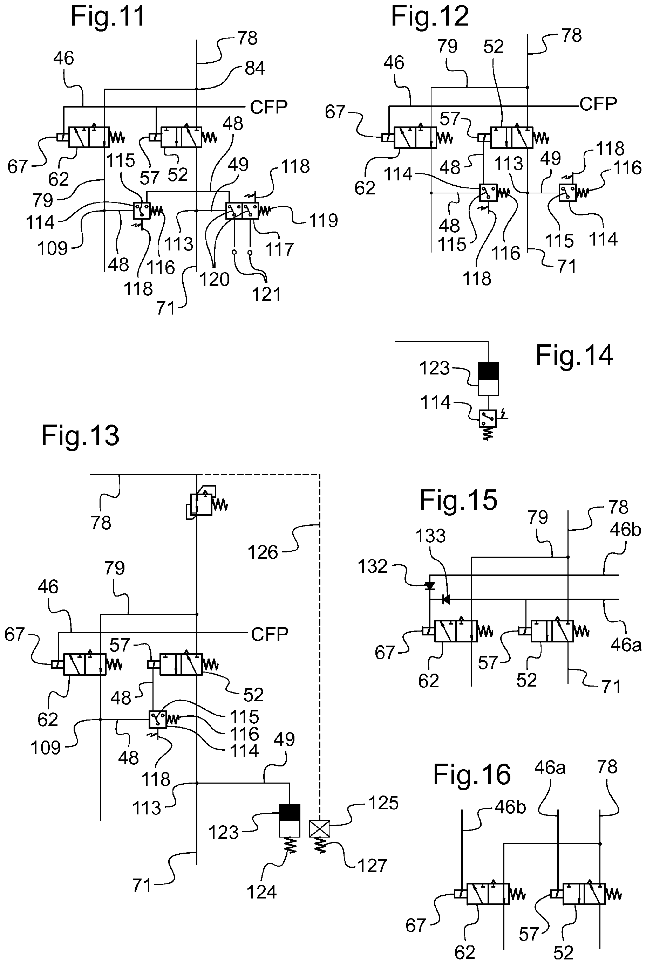

Au surplus, les premier et second capteurs et/ou manostats peuvent être indépendants l'un de l'autre ou peuvent être interconnectés (voir ci-après en référence aux figures 11 à 13).

La figure 3 représente une variante de réalisation des distributeurs 52 et 62 qui, ici, sont configurés de sorte que le frein de parking 7 ne doit pas être appliqué lorsque la consigne d'application du frein de parking CFP est nulle. Il s'agit d'une application dite de disponibilité.

La différence par rapport aux distributeurs illustrés sur la figure 2 réside dans le fait que les première et deuxième positions respectives sont inversées.

En d'autres termes, lorsque la consigne d'application du frein de parking CFP est nulle, le premier distributeur 52 présente une première position par défaut dite de disponibilité dans laquelle son unique orifice de sortie 55b connecté à la conduite de frein de parking 71 communique avec son unique orifice d'entrée 54b connectée à la conduite de commande 78, tandis que son orifice débouchant à l'atmosphère 56b est bouché (figure 3).

Le second distributeur 62 présente quant à lui une première position par défaut dite aussi de disponibilité dans laquelle son unique orifice de sortie 65b communique avec son orifice 66b à l'atmosphère, tandis que son unique orifice d'entrée 64b connectée à la conduite de commande 78 est bouché (figure 3).

Au contraire, lorsque la consigne d'application du frein de parking CFP est non nulle, le premier distributeur 52 présente une seconde position dans laquelle son unique orifice de sortie 55a communique avec son orifice débouchant à l'atmosphère 56a, tandis que son unique orifice d'entrée 54a est bouché ; et le second distributeur 62 présente quant à lui une seconde position dans laquelle son unique orifice de sortie 65a est communique avec son unique orifice d'entrée 64a, tandis que son orifice 66a à l'atmosphère est bouché.

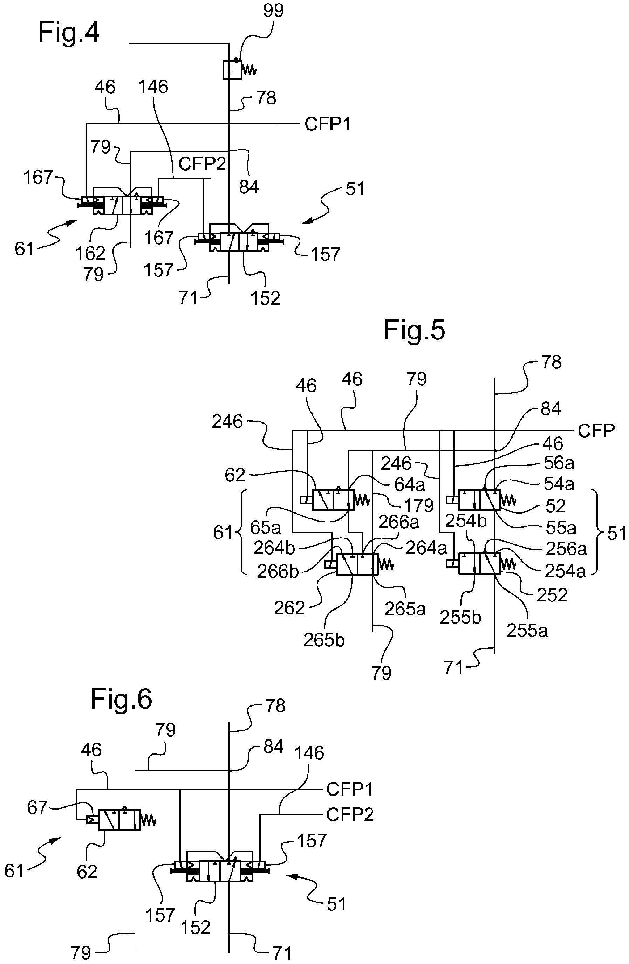

La figure 4 représente une variante de réalisation des premier et second dispositifs de distribution 51 et 61 dans laquelle les premier et second distributeurs 152 et 162 sont ici bistables plutôt que monostables.

Le cas échéant, les premier et second distributeurs 152 et 162 sont chacun pourvus de deux actionneurs 157, 167 de part et d'autre des tiroirs respectifs.

Le dispositif de commande des premier et second dispositifs de distribution 51 et 61 comporte, en plus de la ligne de commande 46 qui est connectée à un des actionneurs 157, 167 de chacun des premier et second distributeurs 152 et 162, une autre ligne de commande 146, distincte de la ligne de commande 46, qui est connectée à l'autre des actionneurs 157, 167 de chacun des premier et second distributeurs 152 et 162.

La ligne de commande 46 est configurée pour faire circuler une première consigne d'application du frein de parking CFP1 pour mettre les tiroirs des premier et second distributeurs 152 et 162 dans leur première position respective ; tandis que l'autre ligne de commande 146 est configurée pour faire circuler une deuxième consigne d'application du frein de parking CFP2 pour mettre les tiroirs des premier et second distributeurs 152 et 162 dans leur deuxième position respective.

La figure 5 représente une variante de réalisation des premier et second dispositifs de distribution 51 et 61 dans laquelle les premier et second distributeurs 52 et 62 sont doublés par d'autres premier et second distributeurs 252 et 262 disposés en série avec les premier et second distributeurs 52 et 62.

En particulier, dans sa première position, le premier distributeur 52 a son unique orifice d'entrée 54a connectée à la conduite de commande 78, son unique orifice de sortie 55a connectée à un unique d'orifice d'entrée 254a de l'autre premier distributeur 252 dans sa première position, lequel autre premier distributeur 252 a son unique orifice de sortie 255a connectée à la conduite de frein de parking 71.

Dans sa première position, le second distributeur 62 a son unique orifice d'entrée 64a qui communique avec son unique orifice de sortie 65a qui est connecté par une conduite intermédiaire à un orifice bouché 266a de l'autre second distributeur 262, lequel a un unique orifice d'entrée 264a connecté par une conduite de dérivation 179 à la conduite preset 79 et en communication avec l'unique orifice de sortie 265a.

On notera que dans sa deuxième position, le premier distributeur 52 a son unique orifice d'entrée 54b qui communique avec son unique orifice de sortie 54b, lequel communique avec l'unique orifice d'entrée 254b de l'autre premier distributeur 252 dans sa deuxième position, l'unique orifice d'entrée connectée à la conduite de commande 78, lequel unique orifice d'entrée 254b communique avec l'unique orifice de sortie 255b de l'autre premier distributeur 252 ; tandis que dans sa deuxième position, le second distributeur 62 a son unique orifice d'entrée 64a bouché et son unique orifice de sortie 65b qui communique avec l'orifice 66b à l'atmosphère et l'autre second distributeur 262 a son unique orifice d'entrée 264b bouchée et son unique orifice de sortie 265b qui communique avec son orifice 266b connecté à la conduite intermédiaire.

En outre, la ligne de commande 46 présente des tronçons de dérivation 246 pour la connecter aux actionneurs respectifs des premier et second distributeurs 252 et 262 en plus d'être connectée aux premier et second distributeurs 52 et 62.

La figure 6 représente une variante de réalisation des premier et second dispositifs de distribution 51 et 61 dans laquelle le premier distributeur 152 est ici bistable plutôt que monostable.

Le cas échéant, le premier distributeur 152 est pourvu de deux actionneurs 157 de part et d'autre du tiroir respectif.

Le dispositif de commande des premier et second dispositifs de distribution 51 et 61 comporte, en plus de la ligne de commande 46 qui est connectée à l'actionneur 67 du second distributeur 62 et à un des actionneurs 157 du premier distributeur 152, une autre ligne de commande 146, distincte de la ligne de commande 46, qui est connectée à l'autre des actionneurs 157 du premier distributeur 152.

La ligne de commande 46 est configurée pour faire circuler une première consigne d'application du frein de parking CFP1 pour mettre les tiroirs des premier et second distributeurs 152 et 62 dans leur première position respective ; tandis que l'autre ligne de commande 146 est configurée pour faire circuler une deuxième consigne d'application du frein de parking CFP2 pour mettre le tiroir du premier distributeur 152 dans sa deuxième position respective. Le fonctionnement de cette variante se déduit directement des explications fournies plus haut pour les figures 2 à 5.

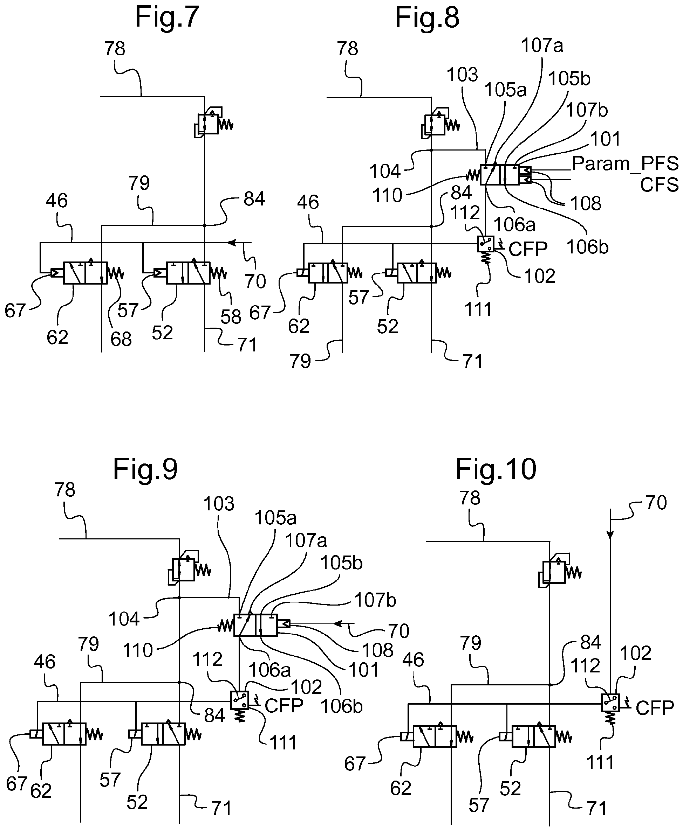

La figure 7 représente une variante de réalisation du dispositif de commande des premier et second distributeurs 52 et 62 illustrés sur la figure 2.

Ici, la ligne de commande 46 est raccordée directement à la conduite principale 70 de sorte que la consigne de frein de parking correspond à une valeur de pression dans cette conduite principale 70.

En d'autres termes, le déclenchement des premier et second distributeurs 52 et 62 pour passer de la première position à la deuxième position, et inversement, est conditionné à une valeur seuil de pression dans la conduite principale 70 qui est définie par les dispositifs de rappel 58 et 68.

La figure 8 représente une autre variante de réalisation du dispositif de commande des premier et second distributeurs 52 et 62 illustrés sur la figure 2.

Ce dispositif de commande, en plus de la ligne de commande 46, comporte un système de gestion conditionnelle disposé en amont des premier et second distributeurs 52 et 62 et admettant un premier état dans lequel il autorise la circulation de la consigne d'application du frein de parking CFP par la ligne de commande 46 et un second état dans lequel il interdit la circulation de la consigne d'application du frein de parking CFP par la ligne de commande 46.

Ce système de gestion conditionnelle est ici pourvu d'un distributeur 101 du type électrovanne monostable, ayant un tiroir mobile à deux positions commandé par exemple par des signaux de commande représentatifs au moins d'une valeur de pression dans la chambre de pression de frein de service 13 Param_PFS et/ou d'une consigne de frein de service CFS qui agissent sur des actionneurs 108, et par un organe de rappel 110.

Dans une première position, ce distributeur 101 présente un orifice d'entrée 105a bouché et connecté à une conduite de gestion 103 raccordée par un piquage 104 à la conduite de commande 78 et un orifice de sortie 106a communiquant avec un orifice 107a à l'atmosphère.

Dans une deuxième position, ce distributeur 101 présente un orifice d'entrée 105b communiquant avec l'orifice de sortie 106b tandis que l'orifice 107b est bouché.

Le système de gestion conditionnelle est en outre pourvu d'un manostat 102 interposé sur la ligne de commande 46 entre l'orifice de sortie du distributeur 101 et les premier et second distributeurs 52 et 62.

Ce manostat 102 présente un organe de rappel 111 ainsi qu'un commutateur 112 qui, dans la deuxième position du distributeur 101, est sollicité par un agent pneumatique venant de la conduite de commande, à l'encontre de l'organe de rappel 111 ; de sorte à ce que la ligne de commande 46 transmette l'information représentative de la consigne de frein de parking CFP.

On notera que sur la figure 8, les premier et deuxième distributeurs 52 et 62 sont en mode disponibilité, comme sur la figure 3.

La figure 9 représente une variante de réalisation du système de gestion conditionnelle illustré sur la figure 8, où la seule différence est que le distributeur 101 est à simple commande, autrement dit qu'il est commandé par un seul signal de commande ici représentatif de la valeur de pression dans la conduite principale 70. Les éléments portant les mêmes références sont similaires à ceux décrits en référence à la figure 8 et le fonctionnement de ce système se déduit de la description faite ci-dessus en référence aux figures 7 et 8.

La figure 10 représente une autre variante de réalisation du système de gestion conditionnelle, où, comme sur la figure 7, la ligne de commande 46 est raccordée à la conduite principale 70 de sorte que la consigne de frein de parking correspond à une valeur de pression dans cette conduite principale 70 et le déclenchement des premier et second distributeurs 52 et 62 pour passer de la première position à la deuxième position, et inversement, est conditionné à une valeur seuil de pression dans la conduite principale 70. Cependant, un manostat 102 similaire au manostat décrit en référence à la figure 8 est interposé sur la ligne de commande de sorte que c'est la pression dans la conduite principale 70 qui permet la commutation du commutateur 112 et ainsi la transmission de l'information représentative de la consigne de frein de parking CFP.

La figure 11 représente une variante de réalisation du dispositif de détection de l'application du frein de parking.

Ici, le dispositif de détection d'application du frein de parking est formé par un premier manostat 114 disposé en sortie du second distributeur 62 et connecté à ce dernier par une première ligne intermédiaire 48 raccordée par un piquage 109 à la conduite preset 79 ; et par un second manostat 117 disposé en sortie du premier distributeur 52 et connecté à ce dernier par une deuxième ligne intermédiaire 49 raccordée par un piquage 113 à la conduite de frein de parking 71.

Le premier manostat 114 et le second manostat 117 sont interconnectés par une prolongation de la première ligne intermédiaire 48.

Le premier manostat 114 comporte un commutateur 115 qui, lorsque le second distributeur 62 autorise le passage du troisième agent de pression pneumatique, reçoit l'information et change de position, à l'encontre d'un ressort 116, pour alimenter une première section du second manostat 117 via une consigne d'alimentation 118 et la prolongation de la première ligne intermédiaire 48.

La première section du second manostat 117 est pourvue d'un commutateur 120 qui commute et lorsque le premier distributeur 52 autorise la vidange de la chambre de pression de frein de parking 25, une seconde section du second manostat 117 reçoit l'information ce qui permet à un autre commutateur 120 de commuter, à l'encontre d'un ressort 119, et d'alimenter, grâce à une autre consigne d'alimentation 118, à la fois un premier voyant lumineux 121 pour indiquer la détection de l'application de la pression preset et un second voyant lumineux 121 pour indiquer la détection de l'application du doigt de blocage sur la tige du piston de freinage.

La figure 12 représente une variante de réalisation du dispositif de détection illustré sur la figure 11.

A la différence du dispositif illustré sur la figure 11, la ligne de commande 46 n'est raccordée, sur la figure 12, qu'à l'actionneur 67 du second distributeur 62.

Le dispositif comporte un premier manostat 114 identique à celui de la figure 12 mais avec la prolongation de la première ligne intermédiaire 48 qui est raccordée à l'actionneur 57 du premier distributeur 52 pour la commande de ce dernier. Ici, le dispositif de détection joue donc le rôle également de dispositif de commande pour le premier distributeur 52.

Lorsque le second distributeur 62 autorise le passage du troisième agent de pression pneumatique, le premier manostat 114 reçoit l'information et déplace son commutateur 115 pour l'alimentation par la consigne d'alimentation 118 de l'actionneur 57.

Le dispositif comporte un second manostat 114, identique au premier manostat 114, disposé en sortie du premier distributeur 52 et connecté à ce dernier par une deuxième ligne intermédiaire 49 raccordée par un piquage 113 à la conduite de frein de parking 71.

Lorsque le premier distributeur 52 autorise la vidange de la chambre de pression de frein de parking 25, le second manostat 117 reçoit l'information et déplace son commutateur 115 pour transmettre une information d'application du frein de parking.

La figure 13 représente une variante de réalisation du dispositif de détection illustré sur la figure 12, qui en diffère seulement en ce que le second manostat est remplacé ici par un organe d'indication 123 à deux positions qui est directement raccordé à la conduite de frein de parking 71 par la deuxième ligne intermédiaire 49 et qui est pourvu d'un ressort de rappel 124.

En fonction de la pression dans la conduite de frein de parking 71, l'organe d'indication 123 (aussi appelé indicateur) admet l'une ou l'autre de ses positions pour transmettre une information sur l'application du frein de parking.

Optionnellement, le dispositif de détection comporte en outre un indicateur à croix 125 directement raccordé au réservoir auxiliaire via la conduite commande 78.

La figure 14 illustre une variante de réalisation de l'organe d'indication 123 visible sur la figure 14, où il associé à un manostat 114 (comme ceux déjà décrits plus haut) plutôt qu'à ressort de rappel 124.

La figure 15 représente un dispositif de test du frein de parking que peut comporter l'unité de contrôle et de commande 3.

Il s'agit d'une première ligne de test 46b pourvue d'une première diode 132 et qui rejoint une ligne d'alimentation 46a qui est raccordée à l'actionneur 67 du second distributeur 62 et à l'actionneur 57 du premier distributeur 52 ; et d'une seconde diode 133 disposée sur la ligne d'alimentation 46a.

La première ligne de test 46b est configurée pour faire cheminer un ou plusieurs signaux de test qui peuvent par exemple correspondre à des consignes respectivement d'un test et d'application du frein de parking, en combinaison avec la ligne d'alimentation 46a, qui peut aussi servir de ligne de test.

La figure 16 représente une variante de réalisation du dispositif de test du frein de parking illustré sur la figure 15.

Il s'agit d'une première ligne d'alimentation et/ou de test 46a raccordée uniquement à l'actionneur 57 du premier distributeur 52 et acheminant un signal de vidange de la chambre de frein de parking; et d'une seconde ligne d'alimentation et/ou de test 46b, indépendante de la première ligne 46a, raccordée à l'actionneur 67 du second distributeur 62 et acheminant un signal preset.

Dans des variantes non illustrées :
- le système de freinage ferroviaire peut comporter un frein de service dépourvu de pièce de coin attachée au piston de freinage, de sorte que ce piston agit directement sur la tige de poussée, lequel agit sur les leviers déformables ; et dans ce cas, le piston de freinage ensemble avec sa tige crantée et la tige de poussée sont mobiles dans la deuxième direction axiale tandis que le frein de parking est configuré de sorte que le doigt de blocage et le piston de maintien sont mobiles dans la première direction axiale ;
- le système de freinage ferroviaire présente une timonerie de freinage différente de celle illustrée sur les figures, en particulier, la timonerie de freinage comporte une semelle configurée pour agir directement sur une roue du véhicule ferroviaire, cette semelle étant directement articulée par une articulation du type pivot fixée à la tige de poussée, un levier rigide fixé au corps du système ainsi qu'un levier déformable fixé à la fois au levier rigide et à l'articulation sur la semelle ; et/ou
- le système de freinage ferroviaire comporte une timonerie de freinage configurée pour agir sur un frein à semelles comme décrit ci-dessus et est pourvu d'un frein de service avec ou sans pièce de coin attachée au piston de freinage.

On rappelle plus généralement que l'invention ne se limite pas aux exemples décrits et représentés.

## Revendications

1. Système de freinage ferroviaire pour véhicule ferroviaire à freins à au moins une garniture ou à au moins une semelle (5), comportant un corps (2), une timonerie de freinage (4) configurée pour agir sur au moins un dit frein (5), un frein de service (6) comportant un piston de freinage (8) mobile par rapport audit corps (2) pour agir sur ladite timonerie de freinage (4) et délimitant avec ledit corps (2) une chambre de pression de frein de service (13) configurée pour être alimentée par un premier agent de pression pneumatique pour mettre ledit piston de freinage (8) dans une position de freinage de service, ainsi qu'un frein de parking (7) configuré pour agir sur ledit piston de freinage (8) dudit frein de service (6) et admettant une configuration de travail et une configuration de repos ;
ledit frein de parking (7) comportant un dispositif de blocage (20) mobile par rapport audit corps (2) pour agir sur ledit piston de freinage (8) et admettant une première position et une seconde position dans laquelle ledit dispositif de blocage (20) est configuré pour immobiliser ledit piston de freinage (8) en position de freinage de service, ledit frein de parking (7) étant alors en configuration de travail, et un dispositif de commande (23, 24) mobile par rapport audit corps (2), délimitant avec ledit corps (2) une chambre de pression de frein de parking (25) configurée pour être alimentée par un deuxième agent de pression pneumatique, et admettant une position de verrouillage dans laquelle ledit dispositif de commande (23, 24) est configuré pour maintenir ledit dispositif de blocage dans sa seconde position ; et
ledit système de freinage ferroviaire (1) comportant en outre un premier dispositif de distribution pneumatique dédié (51) qui est formé par au moins un premier distributeur (52) pourvu d'un tiroir (53) mobile à deux positions, d'un unique orifice d'entrée (54a,b) connecté à une source d'alimentation en agents de pression pneumatique (73), d'un unique orifice de sortie (55a,b) connecté à ladite chambre de pression de frein de parking (25) afin de l'alimenter avec ledit deuxième agent de pression pneumatique ou de la vidanger pour mettre ledit frein de parking (7) respectivement dans ses configurations de repos et de travail, et d'un orifice (56a,b) débouchant à l'atmosphère ; ainsi qu'un second dispositif de distribution pneumatique dédié (61) qui est formé par au moins un second distributeur (62) pourvu d'un tiroir (63) mobile à deux positions, d'un unique orifice d'entrée (64a,b) connecté à ladite source d'alimentation en agents de pression pneumatique (73), d'un unique orifice de sortie (65a,b) connecté à ladite chambre de pression de frein de service (13) afin de l'alimenter avec un troisième agent de pression pneumatique dont la valeur de pression est déterminée, de sorte à appliquer un effort de freinage déterminé lorsque ledit frein de parking (7) est en configuration de travail, et d'un orifice (66a,b) débouchant à l'atmosphère.

2. Système selon la revendication 1, **caractérisé en ce que** le premier distributeur (52) présente une première position par défaut dite de sécurité dans laquelle son unique orifice de sortie (55a) connecté à ladite chambre de pression de frein de parking (25) communique avec son orifice débouchant à l'atmosphère (56a), et le second distributeur (62) présente une première position par défaut dite de sécurité dans laquelle son unique orifice de sortie (65a) connecté à la chambre de pression de frein de service (13) communique avec son unique orifice d'entrée (64a) connectée à la source d'alimentation en agents de pression pneumatique (73).

3. Système selon la revendication 1, **caractérisé en ce que** le premier distributeur (52) présente une première position par défaut dite de disponibilité dans laquelle son unique orifice de sortie (55a) connecté à ladite chambre de pression de frein de parking (25) communique avec son unique orifice d'entrée (54a) connecté à la source d'alimentation en agents de pression pneumatique (73), et le second distributeur (62) présente une première position par défaut dite de disponibilité dans laquelle son unique orifice de sortie (65a) connecté à la chambre de pression de frein de service (13) communique avec son orifice débouchant à l'atmosphère (66a).

4. Système selon l'une quelconque des revendications 1 à 3, **caractérisé en ce qu'**au moins un dudit premier distributeur (52) et dudit second distributeur (62) est monostable et pourvu d'un actionneur (57, 67) configuré pour déplacer le tiroir (53, 63) respectif de sa première position à sa deuxième position en fonction d'un signal de commande (CFP) reçu par cet actionneur, et d'un organe de rappel (58, 68) configuré pour ramener le tiroir respectif de sa deuxième position vers sa première position sans sollicitation de l'actionneur ; et/ou au moins un dudit premier distributeur (152) et dudit second distributeur (162) est bistable et pourvu d'un premier actionneur (157, 167) configuré pour déplacer le tiroir respectif de sa première position à sa deuxième position en fonction d'un premier signal de commande (CFP1) reçu par ce premier actionneur, et d'un deuxième actionneur (157, 167) configuré pour déplacer le tiroir respectif de sa deuxième position vers sa première position en fonction d'un deuxième signal de commande (CFP2) reçu par ce deuxième actionneur.

5. Système selon l'une quelconque des revendications 1 à 4, **caractérisé en ce que** ledit premier dispositif de distribution pneumatique dédié est formé par deux premiers distributeurs (52, 252) identiques et montés en série et ledit second dispositif de distribution pneumatique dédié est formé par deux seconds distributeurs (62, 262) identiques et montés en série.

6. Système selon l'une quelconque des revendications 1 à 5, **caractérisé en ce qu'**il comporte un dispositif de commande dédié configuré pour commander lesdits premier et second dispositifs de distribution pneumatique (51, 61).

7. Système selon la revendication 6, ledit dispositif de commande des premier et second dispositifs de distribution pneumatique comporte une ligne de commande (46) reliée à chacun de ces premier et second dispositifs de distribution pneumatique (51, 61) et configurée pour faire circuler au moins une consigne d'application du frein de parking.

8. Système selon la revendication 7, **caractérisé en ce que** ladite ligne de commande (46) est reliée directement à chacun des premier et second dispositifs de distribution pneumatique (51, 61) et configurée pour faire circuler au moins une consigne d'application du frein de parking.

9. Système selon la revendication 7, **caractérisé en ce que** ladite ligne de commande (46) est reliée directement seulement audit second dispositif de distribution pneumatique (61) et ledit dispositif de commande comporte en outre une ligne de transmission (48) reliant l'unique orifice de sortie (65a,b) du second distributeur (62) dudit second dispositif de distribution pneumatique (61) au premier dispositif de distribution pneumatique (51) et un manostat (114) interposé sur ladite ligne de transmission (48).

10. Système selon l'une quelconque des revendications 7 à 9, **caractérisé en ce que** ledit dispositif de commande des premier et second dispositifs de distribution pneumatique comporte en outre au moins un système de gestion conditionnelle disposé sur ladite ligne de commande (46) en amont desdits premier et second dispositifs de distribution pneumatique (51, 61) et admettant un premier état dans lequel il autorise la circulation de la consigne d'application du frein de parking par la ligne de commande (46) jusqu'aux premier et second dispositifs de distribution pneumatique (51, 61), et un second état dans lequel il interdit la circulation de la consigne d'application du frein de parking par la ligne de commande (46) jusqu'aux premier et second dispositifs de distribution pneumatique (51, 61).

11. Système selon la revendication 10, **caractérisé en ce que** ledit système de gestion conditionnelle est pourvu d'un distributeur (101) ayant un orifice d'entrée (105a,b) connecté à ladite source d'alimentation en agents de pression pneumatique (73), un orifice de sortie (106a,b) connecté à la ligne de commande (46) et un actionneur (108) commandé par au moins un signal de commande représentatif au moins d'une valeur de pression dans une conduite pneumatique principale ou générale dudit système de freinage ferroviaire (1) et/ou d'une valeur de pression dans la chambre de pression de frein de service (13).

12. Système selon l'une des revendications 10 et 11, **caractérisé en ce que** ledit système de gestion conditionnelle est pourvu d'un manostat (102) interposé sur ladite ligne de commande (46).

13. Système selon l'une quelconque des revendications 1 à 12, **caractérisé en ce qu'**il comporte en outre un dispositif de détection (100) dédié configuré pour détecter l'application du frein de parking (7).

14. Système selon la revendication 13, **caractérisé en ce que** ledit dispositif de détection d'application du frein de parking (100) est configuré pour recevoir une information représentative de l'alimentation de la chambre de pression de frein de service (13) par le troisième agent de pression pneumatique via ledit second dispositif de distribution pneumatique (61), et recevoir une information représentative de la vidange de la chambre de pression de frein de parking (25) via ledit premier dispositif de distribution pneumatique (51).

15. Système selon la revendication 14, **caractérisé en ce que** ledit dispositif de détection d'application du frein de parking est formé par un premier manostat (114) disposé en sortie dudit second dispositif de distribution pneumatique (61) et par un second manostat (120) disposé en sortie dudit premier dispositif de distribution pneumatique (51) et connecté audit premier manostat (114).

16. Système selon l'une des revendications 13 et 14, **caractérisé en ce que** ledit dispositif de détection d'application du frein de parking est configuré pour traiter ladite information représentative de l'alimentation de la chambre de pression de frein de service (13) par le troisième agent de pression pneumatique via ledit second dispositif de distribution pneumatique (61), et pour commander ledit premier dispositif de distribution pneumatique (51).

17. Système selon la revendication 16, **caractérisé en ce que** ledit dispositif de détection d'application du frein de parking est formé par un premier manostat (114) disposé en sortie dudit second dispositif de distribution pneumatique (61) et connecté audit premier dispositif de distribution pneumatique (51), et par un organe de détection disposé en sortie dudit premier dispositif de distribution pneumatique (51).

18. Système selon l'une quelconque des revendications 13 à 17, **caractérisé en ce que** ledit dispositif de détection d'application du frein de parking est configuré pour traiter ladite information représentative de l'alimentation de la chambre de pression de frein de service (13) par le troisième agent de pression pneumatique via ledit second dispositif de distribution pneumatique (61) et ladite information représentative de la vidange de la chambre de pression de frein de parking (25) via ledit premier dispositif de distribution pneumatique (51), et pour déclencher un indicateur (121 ; 123) représentatif de l'application du frein de parking.

19. Système selon l'une quelconque des revendications 1 à 18, **caractérisé en ce qu'**il comporte en outre un dispositif de test dédié configuré pour tester le fonctionnement du frein de parking (7), lequel dispositif de test est pourvu d'au moins deux lignes de test (130, 131) connectées audits premier et second dispositifs de distribution pneumatique (51, 61), lesquelles lignes de test (130, 131) sont indépendantes ou interconnectées.

20. Procédé de freinage d'un véhicule ferroviaire comportant un système de freinage ferroviaire (1) selon l'une quelconque des revendications 1 à 19, comportant :
- l'étape de commander le premier dispositif de distribution pneumatique dédié (51) pour alimenter la chambre de pression de frein de parking (25) avec le deuxième agent de pression pneumatique de sorte mettre le frein de parking (7) dans sa configuration de repos puis optionnellement, l'étape d'alimenter la chambre de pression de frein de service (13) avec le premier agent de pression pneumatique de sorte à mettre le piston de freinage (8) dans sa position de freinage de service ; puis
- simultanément ou successivement quel que soit l'ordre, les étapes de commander le second dispositif de distribution pneumatique dédié (61) pour alimenter la chambre de pression de frein de service (13) avec le troisième agent de pression pneumatique de sorte à appliquer un effort de freinage déterminé et de commander le premier dispositif de distribution pneumatique dédié (51) pour vidanger la chambre de pression de frein de parking (25) de sorte mettre le frein de parking (7) dans sa configuration de travail.

21. Procédé selon la revendication 20, **caractérisé en ce qu'**il comporte en outre les étapes de détecter au moins une information représentative de l'alimentation de la chambre de pression de frein de service avec le troisième agent de pression pneumatique et de la vidange de la chambre de pression de frein de parking, et d'en déduire une information représentative de l'application du frein de parking.

## Patentansprüche

1. Schienenbremssystem für ein Schienenfahrzeug mit Bremsen mit zumindest einem Bremsbelag oder zumindest einer Bremssohle (5), enthaltend einen Bremskörper (2), ein Bremsgestänge (4), das dazu ausgelegt ist, auf die zumindest eine Bremse (5) einzuwirken, eine Betriebsbremse (6), die einen relativ zu dem Bremskörper (2) beweglichen Bremskolben (8) zum Einwirken auf das Bremsgestänge (4) enthält und mit dem Bremskörper (2) eine Betriebsbremsdruckkammer (13) begrenzt, die dazu ausgelegt ist, mit einem ersten pneumatischen Druckmittel versorgt zu werden, um den Bremskolben (8) in eine Betriebsbremsposition zu bringen, sowie eine Feststellbremse (7), die dazu ausgelegt ist, auf den Bremskolben (8) der Betriebsbremse (6) einzuwirken und eine Arbeitsstellung und eine Ruhestellung einnehmen kann;
wobei die Feststellbremse (7) eine relativ zum Bremskörper (2) bewegliche Sperrvorrichtung (20) zum Einwirken auf den Bremskolben (8) enthält und eine erste Position und eine zweite Position einnehmen kann, in der die Sperrvorrichtung (20) dazu ausgelegt ist, den Bremskolben (8) in der Betriebsbremsposition festzulegen, wobei sich die Feststellbremse (7) dann in der Arbeitsstellung befindet, sowie eine Steuervorrichtung (23, 24), die relativ zum Bremskörper (2) beweglich ist und mit dem Bremskörper (2) eine Feststellbremsdruckkammer (25) begrenzt, die dazu ausgelegt ist, mit einem zweiten pneumatischen Druckmittel versorgt zu werden, und eine Verriegelungsposition einnehmen kann, in der die Steuervorrichtung (23, 24) dazu ausgelegt ist, die Sperrvorrichtung in ihrer zweiten Position zu halten; wobei das Schienenbremssystem (1) ferner eine zugeordnete erste pneumatische Verteilervorrichtung (51) enthält, die aus zumindest einem ersten Verteiler (52) gebildet ist, der mit einem in zwei Positionen beweglichen Schieber (53), mit einer einzelnen Einlassöffnung (54a, b), die mit einer Versorgungsquelle zur Versorgung mit pneumatischen Druckmitteln (73), mit einer einzelnen Auslassöffnung (55a, b), die mit der Feststellbremsdruckkamer (25) verbunden ist, um diese mit dem zweiten pneumatischen Druckmittel zu versorgen oder zu entleeren, um die Feststellbremse (7) in ihre Ruhe- bzw. Arbeitsstellung zu bringen, und mit einer in die Atmosphäre mündenden Öffnung (56a, b) versehen ist; sowie eine zugeordnete zweite pneumatische Verteilervorrichtung (61), die aus zumindest einem zweiten Verteiler (62) gebildet ist, der mit einem in zwei Positionen beweglichen Schieber (63), mit einer einzelnen Einlassöffnung (64a, b), die mit einer Versorgungsquelle zur Versorgung mit pneumatischen Druckmitteln (73), mit einer einzelnen Auslassöffnung (65a, b), die mit der Betriebsbremsdruckkamer (13) verbunden ist, um diese mit einem dritten pneumatischen Druckmittel zu versorgen, dessen Druckwert vorbestimmt ist, so dass eine vorbestimmte Bremskraft aufgebracht wird, wenn sich die Feststellbremse (7) in Arbeitsstellung befindet, sowie mit einer in die Atmosphäre mündenden Öffnung (66a, b) versehen ist.

2. System nach Anspruch 1, **dadurch gekennzeichnet, dass** der erste Verteiler (52) eine erste Standardposition, Sicherheitsposition genannt, aufweist, in welcher seine einzelne, mit der Feststellbremsdruckkamer (25) verbundene Auslassöffnung (55a) mit seiner in die Atmosphäre mündenden Öffnung (56a) kommuniziert, und der zweite Verteiler (62) eine erste Standardposition, Sicherheitsposition genannt, aufweist, in welcher seine einzelne, mit der Betriebsbremsdruckkamer (13) verbundene Auslassöffnung (65a) mit seiner einzelnen Einlassöffnung (64a) kommuniziert, die mit der Versorgungsquelle zur Versorgung mit pneumatischen Druckmitteln (73) verbunden ist.

3. System nach Anspruch 1, **dadurch gekennzeichnet, dass** der erste Verteiler (52) eine erste Standardposition, Bereitschaftsposition genannt, aufweist, in welcher seine einzelne, mit der Feststellbremsdruckkamer (25) verbundene Auslassöffnung (55a) mit seiner einzelnen Einlassöffnung (54a) kommuniziert, die mit der Versorgungsquelle zur Versorgung mit pneumatischen Druckmitteln (73) verbunden ist, und der zweite Verteiler (62) eine erste Standardposition, Bereitschaftsposition genannt, aufweist, in welcher seine einzelne, mit der Betriebsbremsdruckkamer (13) verbundene Auslassöffnung (65a) mit seiner in die Atmosphäre mündenden Öffnung (66a) kommuniziert.

4. System nach einem der Ansprüche 1 bis 3, **dadurch gekennzeichnet, dass** zumindest einer aus erstem Verteiler (52) und zweitem Verteiler (62) monostabil ist und mit einem Betätigungsglied (57, 67) versehen ist, das dazu ausgelegt ist, den jeweiligen Schieber (53, 63) aus seiner ersten Position in seine zweite Position in Abhängigkeit von einem Steuersignal (CFP) zu verlagern, das von diesem Betätigungsglied empfangen wird, sowie mit einem Rückstellglied (58, 68), das dazu ausgelegt ist, den jeweiligen Schieber von seiner zweiten Position in seine erste Position zurückzuführen, ohne das Betätigungsglied zu beaufschlagen; und/oder zumindest einer aus erstem Verteiler (152) und zweitem Verteiler (162) bistabil ist und mit einem Betätigungsglied (157, 167) versehen ist, das dazu ausgelegt ist, den jeweiligen Schieber aus seiner ersten Position in seine zweite Position in Abhängigkeit von einem ersten Steuersignal (CFP1) zu verlagern, das von diesem Betätigungsglied empfangen wird, sowie mit einem zweiten Betätigungsglied (157, 167), das dazu ausgelegt ist, den jeweiligen Schieber von seiner zweiten Position in seine erste Position in Abhängigkeit von einem zweiten Steuersignal (CFP2) zurückzuführen, das von diesem zweiten Betätigungsglied empfangen wird.

5. System nach einem der Ansprüche 1 bis 4, **dadurch gekennzeichnet, dass** die zugeordnete erste pneumatische Verteilervorrichtung aus zwei ersten Verteilern (52, 252) gebildet ist, die identisch und in Reihe geschaltet sind, und die zugeordnete zweite pneumatische Verteilervorrichtung aus zwei zweiten Verteilern (62, 262) gebildet ist, die identisch und in Reihe geschaltet sind.

6. System nach einem der Ansprüche 1 bis 5, **dadurch gekennzeichnet, dass** es eine zugeordnete Steuervorrichtung enthält, die dazu ausgelegt ist, die erste und die zweite pneumatische Verteilervorrichtung (51, 61) zu steuern.

7. System nach Anspruch 6, wobei die Steuervorrichtung zum Steuern der ersten und der zweiten pneumatischen Verteilervorrichtung eine Steuerdrahtleitung (46) enthält, die mit jeder aus erster und zweiter pneumatischer Verteilervorrichtung (51, 61) verbunden und dazu ausgelegt ist, zumindest eine Anweisung zur Betätigung der Feststellbremse weiterzuleiten.

8. System nach Anspruch 7, **dadurch gekennzeichnet, dass** die Steuerdrahtleitung (46) direkt mit jeder aus erster und zweiter pneumatischer Verteilervorrichtung (51, 61) verbunden und dazu ausgelegt ist, zumindest eine Anweisung zur Betätigung der Feststellbremse weiterzuleiten.

9. System nach Anspruch 7, **dadurch gekennzeichnet, dass** die Steuerdrahtleitung (46) direkt nur mit der zweiten pneumatischen Verteilervorrichtung (61) verbunden ist und die Steuervorrichtung ferner eine Übertragungsdrahtleitung (48) enthält, die die einzelne Auslassöffnung (65a, b) des zweiten Verteilers (62) der zweiten pneumatischen Verteilervorrichtung (61) mit der ersten pneumatischen Verteilervorrichtung (51) verbindet, sowie einen Druckschalter (114), der an der Übertragungsdrahtleitung (48) zwischengeschaltet ist.

10. System nach einem der Ansprüche 7 bis 9, **dadurch gekennzeichnet, dass** die Steuervorrichtung zum Steuern der ersten und der zweiten pneumatischen Verteilervorrichtung ferner zumindest ein bedingungsabhängiges Leitsystem enthält, das der ersten und der zweiten pneumatischen Verteilervorrichtung (51, 61) vorgelagert an der Steuerdrahtleitung (46) angeordnet ist und einen ersten Zustand einnehmen kann, in welchem es das Weiterleiten der Anweisung zur Betätigung der Feststellbremse über die Steuerdrahtleitung (46) bis zur ersten und zweiten pneumatischen Verteilervorrichtung (51, 61) gestattet, sowie einen zweiten Zustand, in welchem es das Weiterleiten der Anweisung zur Betätigung der Feststellbremse über die Steuerdrahtleitung (46) bis zur ersten und zweiten pneumatischen Verteilervorrichtung (51, 61) unterbindet.

11. System nach Anspruch 10, **dadurch gekennzeichnet, dass** das bedingungsabhängige Leitsystem mit einem Verteiler (101) versehen ist, der eine Einlassöffnung (105a, b), die mit der Versorgungsquelle zur Versorgung mit pneumatischen Druckmitteln (73) verbunden ist, eine Auslassöffnung (106a, b), die mit der Steuerdrahtleitung (46) verbunden ist, und ein Betätigungsglied (108) enthält, das über zumindest eine Steuersignal gesteuert wird, das repräsentativ ist für zumindest einen Druckwert in einer Hauptluftbehälterleitung oder Hauptluftleitung des Schienenbremssystems (1), und/oder für einen Druckwert in der Betriebsbremsdruckkammer (13).

12. System nach einem der Ansprüche 10 und 11, **dadurch gekennzeichnet, dass** das bedingungsabhängige Leitsystem mit einem Druckschalter (102) versehen ist, der an der Steuerdrahtleitung (46) zwischengeschaltet ist.

13. System nach einem der Ansprüche 1 bis 12, **dadurch gekennzeichnet, dass** es ferner eine zugeordnete Erfassungsvorrichtung (100) enthält, die dazu ausgelegt ist, die Betätigung der Feststellbremse (7) zu erfassen.

14. System nach Anspruch 13, **dadurch gekennzeichnet, dass** die Erfassungsvorrichtung zum Erfassen der Betätigung der Feststellbremse (100) dazu ausgelegt ist, um eine Information zu empfangen, die für die Versorgung der Betriebsbremsdruckkammer (13) mit dem dritten pneumatischen Druckmittel über die zweite pneumatische Verteilervorrichtung (61) repräsentativ ist, und um eine Information zu empfangen, die für das Entleeren der Feststellbremsdruckkammer (25) über die erste pneumatische Verteilervorrichtung (51) repräsentativ ist.

15. System nach Anspruch 14, **dadurch gekennzeichnet, dass** die Erfassungsvorrichtung zum Erfassen der Betätigung der Feststellbremse aus einem ersten Druckschalter (114), der am Auslass der zweiten pneumatischen Verteilervorrichtung (61) angeordnet ist, und aus einem zweiten Druckschalter (120) gebildet ist, der am Auslass der ersten pneumatischen Verteilervorrichtung (51) angeordnet und mit dem ersten Druckschalter (114) verbunden ist.

16. System nach einem der Ansprüche 13 und 14, **dadurch gekennzeichnet, dass** die Erfassungsvorrichtung zum Erfassen der Betätigung der Feststellbremse dazu ausgelegt ist, um die Information zu verarbeiten, die repräsentativ ist für die Versorgung der Betriebsbremsdruckkammer (13) mit dem dritten pneumatischen Druckmittel über die zweite pneumatische Verteilervorrichtung (61), und um die erste pneumatische Verteilervorrichtung (51) zu steuern.

17. System nach Anspruch 16, **dadurch gekennzeichnet, dass** die Erfassungsvorrichtung zum Erfassen der Betätigung der Feststellbremse aus einem ersten Druckschalter (114), der am Auslass der zweiten pneumatischen Verteilervorrichtung (61) angeordnet ist und mit der ersten pneumatischen Verteilervorrichtung (51) verbunden ist, und aus einem Erfassungsglied gebildet ist, das am Auslass der ersten pneumatischen Verteilervorrichtung (51) angeordnet ist.

18. System nach einem der Ansprüche 13 bis 17, **dadurch gekennzeichnet, dass** die Erfassungsvorrichtung zum Erfassen der Betätigung der Feststellbremse dazu ausgelegt ist, um die Information, die repräsentativ ist für die Versorgung der Betriebsbremsdruckkammer (13) mit dem dritten pneumatischen Druckmittel über die zweite pneumatische Verteilervorrichtung (61), und die Information zu verarbeiten, die repräsentativ ist für das Entleeren der Feststellbremsdruckkammer (25) über die erste pneumatische Verteilervorrichtung (51), und um eine Anzeige (121; 123) auszulösen, die repräsentativ ist für die Betätigung der Feststellbremse.

19. System nach einem der Ansprüche 1 bis 18, **dadurch gekennzeichnet, dass** es ferner eine zugeordnete Prüfvorrichtung enthält, die dazu ausgelegt ist, den Betrieb der Feststellbremse (7) zu prüfen, wobei die Prüfvorrichtung mit zumindest zwei Prüfdrahtleitungen (130, 131) versehen ist, die mit der ersten und der zweiten pneumatischen Verteilervorrichtung (51, 61) verbunden sind, welche Prüfdrahtleitungen (130, 131) unabhängig voneinander oder miteinander verbunden sind.

20. Verfahren zum Bremsen eines Schienenfahrzeugs mit einem Schienenbremssystem (1) nach einem der Ansprüche 1 bis 19, umfassend:
- den Schritt des Steuerns der zugeordneten ersten pneumatischen Verteilervorrichtung (51) zum Versorgen der Feststellbremsdruckkamer (25) mit dem zweiten pneumatischen Druckmittel, so dass die Feststellbremse (7) in ihre Ruhestellung gebracht wird, und optional den Schritt des Versorgens der Betriebsbremsdruckkamer (13) mit dem ersten pneumatischen Druckmittel, so dass der Bremskolben (8) in seine Betriebsbremsposition gebracht wird; dann
- gleichzeitig oder aufeinanderfolgend in beliebiger Reihenfolge die Schritte des Steuerns der zugeordneten zweiten pneumatischen Verteilervorrichtung (61) zum Versorgen der Betriebsbremsdruckkammer (13) mit dem dritten pneumatischen Druckmittel, so dass eine vorbestimmte Bremskraft aufgebracht wird, und des Steuerns der zugeordneten ersten pneumatischen Verteilervorrichtung (51) zum Entleeren der Feststellbremsdruckkammer (25), so dass die Feststellbremse (7) in ihre Arbeitsstellung gebracht wird.

21. Verfahren nach Anspruch 20, **dadurch gekennzeichnet, dass** es ferner die Schritte des Erfassens zumindest einer Information, die repräsentativ ist für die Versorgung der Betriebsbremsdruckkammer mit dem dritten pneumatischen Druckmittel und für das Entleeren der Feststellbremsdruckkammer, und des Ableitens einer Information umfasst, die repräsentativ ist für die Betätigung der Feststellbremse.

## Claims

1. A rail vehicle braking system having brakes with at least one lining or at least one block (5), comprising a body (2), a braking linkage (4) configured to act on at least one said brake (5), a service brake (6) comprising a braking piston (8) movable relative to said body (2) to act on said braking linkage (4) and delimiting with said body (2) a service brake pressure chamber (13) configured to be supplied by a first pneumatic pressure agent to place said braking piston (8) in a service braking position, as well as a parking brake (7) configured to act on said braking piston (8) of said service brake (6) and having a working configuration and a resting configuration;
said parking brake (7) comprising a blocking device (20) movable relative to said body (2) to act on said braking piston (8) and having a first position and a second position in which said blocking device (20) is configured to immobilize said braking piston (8) in service braking position, said parking brake (7) then being in working configuration, and a control device (23, 24) movable relative to said body (2), delimiting with said body (2) a parking brake pressure chamber (25) configured to be supplied by a second pneumatic pressure agent, and having a locking position in which said control device (23, 24) is configured to hold said blocking device in its second position; and
said rail vehicle braking system (1) further comprising a dedicated first pneumatic distribution device (51) which is formed by at least one first distributor (52) provided with a movable slide (53) having two positions, with a single inlet aperture (54a,b) connected to a source of supply of pneumatic pressure agents (73), with a single outlet aperture (55a,b) connected to said parking brake pressure chamber (25) in order to supply it with said second pneumatic pressure agent or vent it to place said parking brake (7) respectively in its resting and working configurations, and with an aperture (56a,b) opening into the atmosphere; as well as a dedicated second pneumatic distribution device (61) which is formed by at least one second distributor (62) provided with a movable slide (63) having two positions, with a single inlet aperture (64a,b) connected to said source of supply (73) of pneumatic pressure agents, with a single outlet aperture (65a,b) connected to said service brake pressure chamber (13) in order to supply it with a third pneumatic pressure agent of which the pressure value is determined, so as to apply a determined braking force when said parking brake (7) is in working configuration, and with an aperture (66a,b) opening into the atmosphere.

2. A system according to claim 1, **characterized in that** the first distributor (52) has a first position by default referred to as a safety position in which its single outlet aperture (55a) connected to said parking brake pressure chamber (25) communicates with its aperture (56a) opening into the atmosphere, and the second distributor (62) has a first position by default referred to as a safety position in which its single outlet aperture (65a) connected to the service brake pressure chamber (13) communicates with its single inlet aperture (64a) connected to the source of supply (73) of pneumatic pressure agents.

3. A system according to claim 1, **characterized in that** the first distributor (52) has a first position by default referred to as an availability position in which its single outlet aperture (55a) connected to said parking brake pressure chamber (25) communicates with its single inlet aperture (54a) connected to the source of supply (73), of pneumatic pressure agents, and the second distributor (62) has a first position by default referred to as an availability position in which its single outlet aperture (65a) connected to the service brake pressure chamber (13) communicates with its aperture opening into the atmosphere;

4. A system according to any one of claims 1 to 3, **characterized in that** at least one of said first distributor (52) and of said second distributor (62) is monostable and provided with an actuator (57, 67) configured to move the respective slide (53, 63) from its first position to its second position according to a control signal (CFP) received by that actuator, and with a return member (58, 68) configured to bring the respective slide back from its second position to its first position without being acted upon by the actuator; and/or at least one of said first distributor (152) and of said second distributor (162) is bistable and provided with a first actuator (157, 167) configured to move the respective slide from its first position to its second position according to a first control signal (CFP1) received by that first actuator, and with a second actuator (157, 167) configured to move the respective slide from its second position to its first position according to a second control signal (CFP2) received by that second actuator.

5. A system according to any one of claims 1 to 4, **characterized in that** said dedicated first pneumatic distribution device is formed by two first identical distributors (52, 252) which are mounted in series and said dedicated second pneumatic distribution device is formed by two identical second distributors (62, 262) which are mounted in series;

6. A system according to any one of claims 1 to 5, **characterized in that** it comprises a dedicated control device configured to control said first and second pneumatic distribution devices (51, 61).

7. A system according to claim 6, said control device of the first and second pneumatic distribution devices comprises a control line (46) linked to each of these first and second pneumatic distribution devices (51, 61) and which is configured to convey at least one application setting of the parking brake.

8. A system according to claim 7, **characterized in that** said control line (46) is directly linked to each of the first and second pneumatic distribution devices (51, 61) and configured to convey at least one application setting of the parking brake.

9. A system according to claim 7, **characterized in that** said control line (46) is directly linked only to said second pneumatic distribution device (61) and said control device further comprises a transmission line (48) linking the single outlet aperture (65a, b) of the second distributor (62) of said second pneumatic distribution device (61) to the first pneumatic distribution device (51) and a pressure switch (114) interposed on said transmission line (48).

10. A system according to any one of claims 7 to 9, **characterized in that** said control device of the first and second pneumatic distribution devices further comprises at least one conditional management system disposed on said control line (46) upstream of said first and second pneumatic distribution devices (51, 61) and having a first state in which its authorizes the passage of the application setting of the parking brake by the control line (46) to the first and second pneumatic distribution devices (51, 61), and a second state in which it prohibits the passage of the application setting of the parking brake by the control line (46) to the first and second pneumatic distribution devices (51, 61).

11. A system according to claim 10, **characterized in that** said conditional management system is provided with a distributor (101) having an inlet aperture (105a,b) connected to said source of supply (73) of pneumatic pressure agents, an outlet aperture (106a,b) connected to the control line (46) and an actuator (108) controlled by at least one control signal representing at least one pressure value in a main or general pneumatic pipe of said rail vehicle braking system (1) and/or a pressure value in the service brake pressure chamber (13).

12. A system according to one of claims 10 and 11, **characterized in that** said conditional management system is provided with a pressure switch (102) interposed on said control line (46).

13. A system according to any one of claims 1 to 12, **characterized in that** it further comprises a dedicated detection device (100) configured to detect the application of the parking brake (7).

14. A system according to claim 13, **characterized in that** said parking brake application detection device (100) is configured to receive an information item representing the supply of the service brake pressure chamber (13) by the third pneumatic pressure agent via said second pneumatic distribution device (61), and to receive an information item representing the venting of the parking brake pressure chamber (25) via said first pneumatic distribution device (51).

15. A system according to claim 14, **characterized in that** said parking brake application detection device is formed by a first pressure switch (114) disposed at an exit from said pneumatic distribution device (61) and by a second pressure switch (120) disposed at an exit from said first pneumatic distribution device (51) and connected to said first pressure switch (114).

16. A system according to one of claims 13 and 14, **characterized in that** said parking brake application detection device is configured to process said information item representing the supply of the service brake pressure chamber (13) by the third pneumatic pressure agent via said second pneumatic distribution device (61), and to control said first pneumatic distribution device (51).

17. A system according to claim 16, **characterized in that** said parking brake application detection device is formed by a first pressure switch (114) disposed at an exit from said second pneumatic distribution device (61) and connected to said first pneumatic distribution device (51), and by a detection member disposed at an exit from said first pneumatic distribution device (51).

18. A system according to any one of claims 13 to 17, **characterized in that** said parking brake application detection device is configured to process said information item representing the supply of the service brake pressure chamber (13) by the third pneumatic pressure agent via said second pneumatic distribution device (61) and said information item representing the venting of the parking brake pressure chamber (25) via said first pneumatic distribution device (51), and to trigger an indicator (121 ; 123) representing the application of the parking brake.

19. A system according to any one of claims 1 to 18, **characterized in that** it further comprises a dedicated test device configured to test the operation of the parking brake (7), which test device is provided with at least two test lines (130, 131) connected to said first and second pneumatic distribution devices (51, 61), which test lines (130, 131) are independent or interconnected.

20. A method of braking a rail vehicle comprising a rail vehicle braking system (1) according to any one of claims 1 to 19, comprising:
- the step of controlling the dedicated first pneumatic distribution device (51) to supply the parking brake pressure chamber (25) with the second pneumatic pressure agent so as to place the parking brake (7) in its resting configuration then optionally, the step of supplying the service brake pressure chamber (13) with the first pneumatic pressure agent so as to place the braking piston (8) in its service braking position; then
- simultaneously or successively whatever the order is, the steps of controlling the dedicated second pneumatic distribution device (61) to supply the service brake pressure chamber (13) with the third pneumatic pressure agent so as to apply a determined braking force and control the dedicated first pneumatic distribution device (51) to vent the parking brake pressure chamber (25) so as to place the parking brake (7) in its working configuration.

21. A method according to claim 20, **characterized in that** it further comprises the steps of detecting at least one information item representing the supply of the service brake pressure chamber with the third pneumatic pressure agent and the venting of the parking brake pressure chamber, and of deducing therefrom an information item representing the application of the parking brake.
